(19) Europäisches Patentamt
European Patent Office
Office européen des brevets

(11) EP 2 096 126 A1

(12) **EUROPEAN PATENT APPLICATION**
published in accordance with Art. 153(4) EPC

(43) Date of publication:
**02.09.2009 Bulletin 2009/36**

(21) Application number: **07850886.8**

(22) Date of filing: **19.12.2007**

(51) Int Cl.:
***C08F 4/6592*** *(2006.01)* ***C08F 10/00*** *(2006.01)*

(86) International application number:
**PCT/JP2007/074416**

(87) International publication number:
**WO 2008/075717 (26.06.2008 Gazette 2008/26)**

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **19.12.2006 JP 2006341343**

(71) Applicant: **Mitsui Chemicals, Inc.**
**Tokyo 105-7117 (JP)**

(72) Inventors:
- **FUNAYA, Munehito**
**Sodegaura-shi**
**Chiba 299-0265 (JP)**
- **SAKUMA, Atsushi**
**Sodegaura-shi**
**Chiba 299-0265 (JP)**
- **YAMASHITA, Masahiro**
**Sodegaura-shi**
**Chiba 299-0265 (JP)**

(74) Representative: **Benson, John Everett**
**J. A. Kemp & Co.**
**14 South Square**
**Gray's Inn**
**London WC1R 5JJ (GB)**

# (54) SOLID CATALYST FOR OLEFIN POLYMERIZATION, OLEFIN POLYMERIZATION METHOD, AND OLEFIN POLYMER PARTICLE PRODUCED BY THE METHOD

(57) An object of the present invention is to provide solid catalyst component for manufacturing an olefin polymer having an excellent particulate morphology without the concern of causing fouling, and a polymerization of olefin in the presence of said solid catalyst component.

A solid catalyst (K) for olefin polymerization of the invention is **characterized by** meeting the following requirements [1] and [2]:
[1] a loss of ignition is 30 wt% or less as measured on a differential thermogravimeter; and
[2] after treating the catalyst with water vapor of room temperature and then contacting it with acetonitrile, a component eluted into the acetonitrile comprises a compound having a molecular skeleton represented by the following general formula [I].

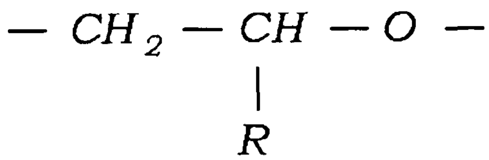
--------- [I]

(R in the above formula [I] is a hydrogen atom or an alkyl group having 1 to 12 carbon atoms.)

EP 2 096 126 A1

FIG. 1

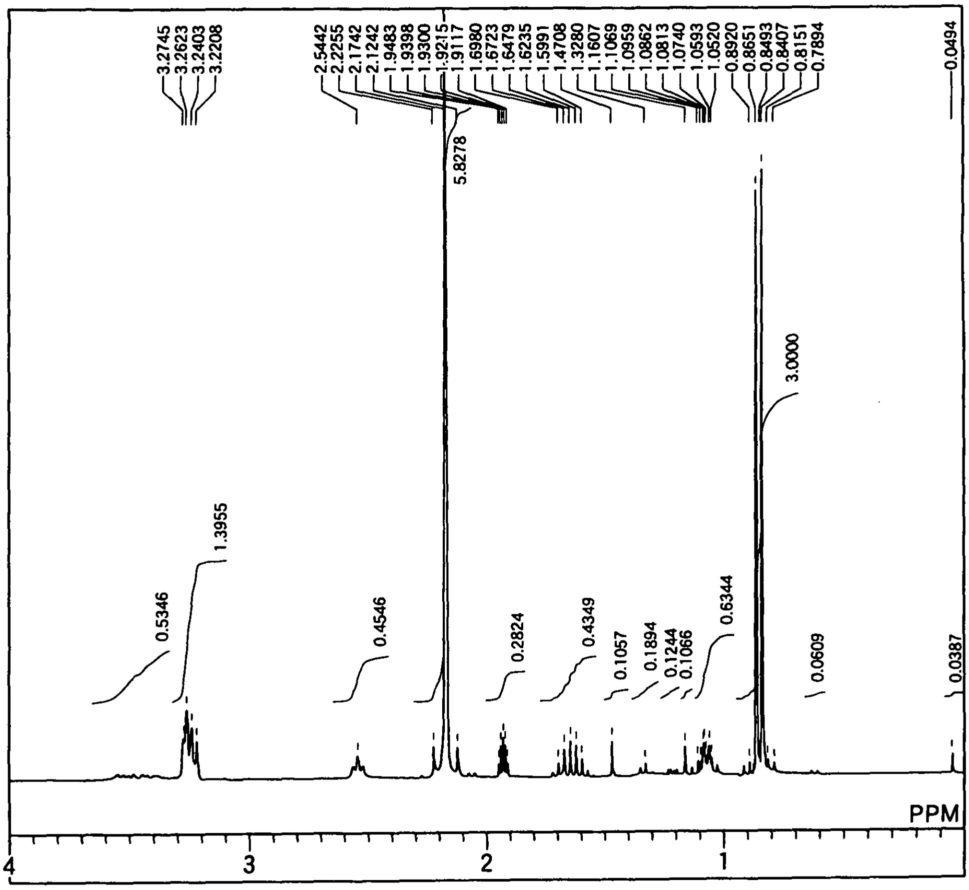
3.2745
3.2623
3.2403
3.2208
2.5442
2.2255
2.1742
2.1242
1.9483
1.9398
1.9300
1.9215
1.9117
1.6980
1.6723
1.6479
1.6235
1.5991
1.4708
1.3280
1.1607
1.1069
1.0959
1.0862
1.0813
1.0740
1.0593
1.0520
0.8920
0.8651
0.8493
0.8407
0.8151
0.7894
0.0494
5.8278
3.0000
1.3955
0.5346
0.4546
0.2824
0.4349
0.1057
0.1894
0.1244
0.1066
0.6344
0.0609
0.0387
PPM
4
3
2
1

## Description

BACKGROUND OF THE INVENTION

1. Field of the Invention

The present invention relates to solid catalyst for olefin polymerization, olefin polymerization method using the solid catalyst, and olefin polymer particle produced by the method.

2. Description of the related arts

It is known that polyolefine, such as polyethylene, polypropylene, ethylene · $\alpha$-olefin copolymer, and propylene · $\alpha$-olefin copolymer can be manufactured by olefin polymerization or olefin copolymerization under existence of metallocene catalyst known as homogeneous catalyst comprising metallocene compound, such as metallocene compound of fourth group metal, e.g. zirconium, and co-catalyst, such as organoaluminum compound, etc. For the metallocene catalyst, "homogeneous catalyst" comprising metallocene compound and co-catalyst component, such as aluminoxane, and "supporting solid catalyst" supporting metallocene, co·catalyst, etc. on a carrier.

From the view point of polyolefin industry, the homogeneous catalyst is suitably used for a solution polymerization process, however, when said catalyst is used for a gas-phase or a slurry polymerization process, there is a problem that polymer becomes indeterminate form particles showing low bulk density, causing aggregation or adherence in the polymerization vessel. To the contrary, it is known that the supporting solid catalyst, when compared to the homogeneous catalyst, is superior in polymer particulate morphology and higher bulk density can be obtained when used in a gas-phase or a slurry polymerization process. However, said supporting solid catalyst may cause aggregated polymer, sheet-form polymer, etc. (hereinafter, these phenomena sometimes referred as "fouling".) during polymerization process, therefore, it may become an obstacle for a long term stable polymerization process.

It is known that when manufacturing polymers comprising components having a low melting point, e.g. ethylene-propylene copolymer having relatively high ethylene content or noncrystalline propylene-ethylene copolymer, namely propylene-ethylene block copolymer manufactured by multistep polymerization process wherein former process is a continuous polymerization of propylene alone or a mixture of propylene and a small amount of ethylene and latter process is a continuous polymerization of propylene and ethylene, fouling tends to occur. Accordingly, a solution for this issue was required.

As a solution, Japanese Unexamined Patent Publication No. 2000-297114 discloses the use of an olefin pre-polymerized solid catalyst supported thereon a surfactant for polymerization. Further, Japanese Unexamined Patent Publication No. 2000-327707 exemplifies a polymerization method wherein an olefin pre-polymerized solid catalyst is used and surfactant is added during polymerization. However, effects of these examples are far from being sufficient. Moreover, when surfactant is added during polymerization process, further device in polymerization equipment is required for supplying the surfactant. This is not preferable in an interest of economy.

On the other hand, methods wherein metallocene supporting solid catalyst is washed with solvent are disclosed. For instance, pamphlet of WO00/008080 discloses a method wherein metallocene supporting solid catalyst is washed with specific solvent at a specific temperature for several times. Japanese Unexamined Patent Publication No. 2004-51715 discloses a metallocene supporting solid catalyst washing method wherein the catalyst is washed till concentration of transition metal derived from metallocene compound in washing waste become less than a specific amount. Further, Japanese Unexamined Patent Publication No. 2002-284808 discloses a method wherein pre-polymerized metallocene supporting solid catalyst is washed with organic solvent comprising organoaluminum.

However, said methods requiring highly effective washing use a large amount of solvent and generate a large amount of waste. From the view point of industrial production, said methods comprise many problems, e.g. requirement of a long term washing process.

Patent Article 1: Japanese Unexamined Patent Publication No. 2000-297114

Patent Article 2: Japanese Unexamined Patent Publication No. 2000-327707

Patent Article 3: a pamphlet of WO00/008080

Patent Article 4: Japanese Unexamined Patent Publication No. 2004-51715

Patent Article 5: Japanese Unexamined Patent Publication No. 2002-284808

None Patent Article 1: Angew. Chem. Int. Ed. Engl., 24, 507 (1985)

SUMMARY OF THE INVENTION

PROBLEMS TO BE SOLVED BY THE INVENTION

An object of the invention is to provide solid catalyst for olefin polymerization used in the production of an olefin polymer having an excellent particulate morphology with good efficiency without the concern of causing fouling and without greatly reducing polymerization activity and polymerization method of olefin in the presence of said solid catalyst.

MEANS TO SOLVE THE PROBLEMS

The inventors have gone through several keen examinations in order to solve the problems of known techniques described above, and as a result, they have found that an olefin polymer having an excellent particulate morphology can be manufactured with good efficiency without the concern of causing fouling by using a solid catalyst for olefin polymerization satisfying specific requirements.

Namely, a solid catalyst (K) for olefin polymerization of the invention is characterized by meeting the following requirements [1] and [2]:

[1] a loss of ignition is 30 wt% or less as measured on a differential thermogravimeter; and

[2] after treating the catalyst with water vapor of room temperature and then contacting it with acetonitrile, a component eluted into the acetonitrile comprises compound having a molecular skeleton represented by the following general formula [I].

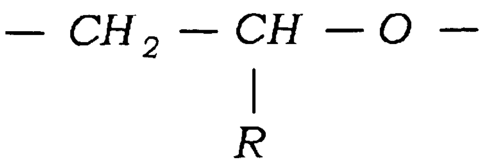

--------- [I]

(R in the above formula [I] is a hydrogen atom or an alkyl group having 1 to 12 carbon atoms.)

Preferred embodiment of solid catalyst (K) for olefin polymerization of the invention meets the following requirement [3] in addition to the above requirements [1] and [2].

[3] After contacting hexane and filtering out solid part, filtrate does not substantially comprise nonvolatile component.

Further, the other embodiment of the present invention relates to solid catalyst (K') for olefin polymerization wherein the solid catalyst (K) for olefin polymerization is pre-polymerized with one or more olefin selected from ethylene and $\alpha$-olefin having 3 to 8 carbon atoms. Hereinafter, said solid catalyst (K') sometimes abbreviated to "pre-polymerized catalyst".

Present invention relates to polymerization method of one or more monomer (M) selected from ethylene and $\alpha$-olefin having 3 to 12 carbon atoms, using solid catalyst (K) or (K') for olefin polymerization, and optionally, in the presence of (B) compound comprising element of group 13 in periodic table. In this polymerization method, monomer (M) is preferably propylene and one or more monomer selected from ethylene and $\alpha$-olefin having 4 to 10 carbon atoms, or preferably ethylene and one or more monomer selected from $\alpha$-olefin having 3 to 10 carbon atoms.

Present invention further relates to olefin polymer particle produced by said polymerization method of one or more monomer (M) selected from ethylene and $\alpha$-olefin having 3 to 12 carbon atoms, using solid catalyst (K) or (K') for olefin polymerization, and optionally, in the presence of (B) compound comprising element of group 13 in periodic table.

The first preferred embodiment of said olefin polymer particle comprises 50 to 100 mole% of repeating unit (U1) derived from propylene and 0 to 50 mole% of repeating unit (U2) derived from one or more olefin selected from ethylene and $\alpha$-olefin having 4 to 10 carbon atoms. (Hereinafter, said olefin polymer particle sometimes referred as "propylene based polymer particle".) Among them, propylene based polymer particle having melting point (Tm) of 130°C or less is preferable, and propylene based polymer particle having bulk density of 0.30 (g/ml) or more is more preferable.

Second preferred embodiment of said olefin polymer particle comprises 50 to 100 mole% of repeating unit (U3) derived from ethylene and 0 to 50 mole% of repeating unit (U4) derived from one or more olefin selected from $\alpha$-olefin having 3 to 10 carbon atoms. (Hereinafter, said olefin polymer particle sometimes referred as "ethylene based polymer particle".)

EFFECT OF THE INVENTION

Solid catalyst used for manufacturing olefin polymer having an excellent particulate morphology with good efficiency without the concern of causing fouling and method for olefin polymerization in the presence of the solid catalyst are provided. Effects of said polymerization method of the invention also satisfactorily exert to manufacture polymer having low melting point, which tends to cause fouling and is difficult to manufacture with good efficiency.

BREIF DESCRIPTION OF THE DRAWINGS

[Fig. 1] $^1$H-NMR spectral chart of eluted component in acetonitrile after contacting the solid catalyst for olefin polymerization obtained in example 1 of the invention with deuterated acetonitrile.

PREFERRED EMBODIMENTS OF THE INVENTION

Hereinafter, preferred embodiments of the invention is described in detail in the following order: (1) solid catalyst for olefin polymerization, (2) olefin polymerization method in the presence of the solid catalyst, and (3) polymer particle produced by the polymerization method.

(1) A Solid Catalyst for Olefin Polymerization

A solid catalyst (K) for olefin polymerization of the invention is
characterized by meeting the following requirements [1] and [2], preferably all the following requirements [1], [2] and [3].

[1] a loss of ignition is 30 wt% or less as measured on a differential thermogravimeter; and

[2] after treating the catalyst with water vapor of room temperature and then contacting it with acetonitrile, component eluted into the acetonitrile comprises compound having a molecular skeleton represented by the following general formula [I].

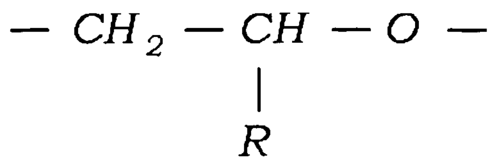

--------- [I]

(R in the above formula [I] is a hydrogen atom or an alkyl group having 1 to 12 carbon atoms.)

[3] After contacting hexane and filtering out solid part, filtrate does not substantially comprise nonvolatile component.

Hereinafter, said requirements [1] to [3] are described in detail.

(Requirement [1])

A solid catalyst (K) for olefin polymerization of the invention is **characterized in that** a loss of ignition as measured on a differential thermogravimeter is 30 wt% or less, preferably 25 wt% or less, more preferably 20 wt% or less. As described below, a loss of ignition of the invention is determined by weight reduction rate (wt%) at 200 to 600°C based on a weight at 200°C, by using alumina for a reference material, extracting approximately 10mg of sample in the atmosphere, and using temperature raising profile wherein temperature is raised to 600°C at a rate of 5°C/min. and held at 600°C for 30 minutes.

According to the invention, preferably, residues after the ignition substantially comprise atoms selected from aluminum, silicon and oxygen atoms, more preferably, the same comprise inorganic fine particles including oxygen atom as indispensable atom and one or more atom selected from aluminum and silicon atoms. Note that "substantially comprise atoms selected from aluminum, silicon and oxygen atoms" determines that "a total amount of atoms selected from aluminum, silicon and oxygen atoms with respect to a total amount of ignition residues is 80% or more on a weight basis".
Said ignition residues of the invention substantially comprise atoms selected from aluminum, silicon and oxygen atoms. This can be easily known by amount determination and identification of said ignition residues by elemental analysis methods such as Inductively-Coupled Plasma analysis (ICP), known analyses such as ion chromatography, etc.

(Requirement [2])

A solid catalyst (K) for olefin polymerization of the invention is
characterized by meeting not only the above requirement [1] but also [2] described below.

[2] after treating the catalyst with water vapor of room temperature and then contacting it with acetonitrile, component eluted into the acetonitrile comprises compound having a molecular skeleton represented by the following general formula [I].

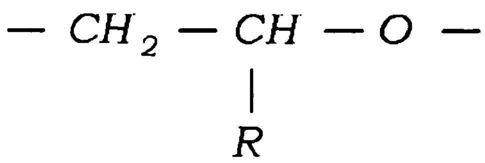

--------- [I]

Namely, after treating the catalyst with water vapor of room temperature and then contacting it with acetonitrile, eluted component in the acetonitrile has molecular skeleton represented by general formula [I]. Said skeleton can be identified by known analysis methods such as nuclear magnetic resonance (NMR) spectrum as mentioned below. (Hereinafter, molecular skeleton represented by general formula [I] sometimes referred as "oxyalkylene skeleton.")
In the above general formula [I], R is hydrogen atom or alkyl group having 1 to 12 carbon atoms. For alkyl group having 1 to 12 carbon atoms, linear or branched alkyl groups such as methyl group, ethyl group, n-propyl group, isopropyl group, n-butyl group, isobutyl group, sec-butyl group, tert-butyl group, n·pentyl group, n-hexyl group, n-heptyl group, n-octyl group and n-nonyl group can be exemplified. A solid catalyst wherein R is methyl group is preferably used, since it is superior in polymerization activity and has an excellent inhibitory effect on fouling.
The treatment with water vapor of room temperature is carried out by exposing solid catalyst (K) for olefin polymerization in a dessicator including saturated potassium acetate aqueous solution for 5 or more days. During said exposure, in order for solid catalyst (K) to contact sufficiently with water vapor, it is required to spread said solid catalyst (K) evenly in a vessel and, when required, suitably stir and mix.
Next, solid material treated with water vapor according to the method described above is added into acetonitrile and stirred for 30 minutes to 10 hours at 20 to 30°C. Note that deuterated acetonitrile can be used instead of acetonitrile. In this case, weight ratio of acetonitrile (S) and said solid material [a weight of S / a weight of solid material] is preferably 1:0.15 to 1:1.
Said stirring is followed by filtration using membrane filter, glass wool, etc., in order to remove said solid material. Mesh of filtering medium, such as filter, is not particularly limited, unless it inhibits NMR analysis of filtrate subsequently performed.
Content of compound having molecular skeleton represented by general formula [I] eluted from solid catalyst (K) for olefin polymerization, calculated from NMR analysis of filtrate, is generally more than 0.20 wt% and 10 wt% or less, preferably 0.3 to 5 wt% with respect to said solid catalyst (K) for olefin polymerization. When a content of compound having a molecular skeleton represented by general formula [I] is less than 0.1 wt%, fouling occurs during polymerization and reduction in bulk density occurs when olefin polymer particle is propylene based polymer particle, while more than 10 wt%, polymerization activity may decrease.
Analysis method of eluted component is not particularly limited, however, when deuterated acetonitrile is used in the above method, $^{1}$H-NMR (nuclear magnetic resonance spectrum) method can be used for the analysis. In general formula [I], a signal of hydrogen atom which bonds to carbon atom adjacent to oxygen atom is observed at 3 to 4 ppm, when tetramethylsilane is a reference material in deuterated acetonitrile. For instance, a signal of methyl group is

observed at 0.8 to 1.5 ppm when R in general formula [I] is methyl group.

Content of molecular skeleton represented by general formula [I] can be calculated by adding reference material during the measurement of $^1$H-NMR described above and measuring intensity ratio of its signal. Said reference material preferably has no signal which overlaps with the same of solvent and eluted component, and in particular, benzene, chlorobenzene, naphthalene, chloroform, methylene chloride, etc. can be exemplified.

(Requirement [3])

Preferred embodiment of solid catalyst (K) for olefin polymerization of the invention is characterized by meeting the following requirement [3] in addition to the above requirements [1] and [2].

[3] After contacting hexane and filtering out solid part, filtrate does not substantially comprise nonvolatile component. Contact of solid catalyst (K) for olefin polymerization and hexane is carried out under inert gas atmosphere, such as dry nitrogen or dry argon. Said hexane is sufficiently dehydrated and deoxidized.

When contacting solid catalyst (K) for olefin polymerization with hexane, amount of hexane is 30 to 100 times larger weight than that of solid catalyst (K) for olefin polymerization and said contact is performed by stirring 30 minutes to 10 hours at 20 to 30°C. And then, filtered with such membrane filter that has sufficient diameter to remove solid part.

"Filtrate does not substantially comprise nonvolatile component" implies the following: when filtrate obtained from the above method is concentrated at 20 to 30°C under reduced pressure, dried at 20 to 30°C, 1 to 5 hPa until it reaches a constant weight, the weight of the obtained concentrated and dried material is 5wt% or less, preferably 3wt% or less, more preferably 1wt% or less, and the most preferably 0.5wt% or less with respect to that of solid catalyst (K) for olefin polymerization used in the contact.

Manufacturing method of solid catalyst (K) for olefin polymerization of the invention is not particularly limited, as far as the above requirements [1] and [2], preferably [1], [2] and [3] are satisfied at a time, however, considering manufacturing efficiency, the following methods described in examples of the invention is preferably used.

Namely, solid catalyst (K) for olefin polymerization of the invention can be efficiently manufactured when the following processes P1 and P2 are carried out in sequence.

[Process P1] A contact process of (A) inorganic fine particles substantially comprising atoms selected from aluminum, silicon and oxygen atoms with (B) compound comprising element of group 13 in periodic table, in hydrocarbon medium.

[Process P2] A contact process of suspension obtained from the above process P1 with (C) compound comprising oxyalkylene skeleton, (D) metallocene compound and, optionally, (B) compound comprising element of group 13 in periodic table, in random order.

Porous oxide, clay and clay mineral can be exemplified as (A) inorganic fine particles substantially comprising atoms selected from aluminum, silicon and oxygen atoms used in the above process P1.

For porous oxide, in particular, $SiO_2$ $Al_2O_3$, natural or synthetic zeolite, $SiO_2$-MgO. $SiO_2$-$Al_2O_3$, $SiO_2$-$TiO_2$, $SiO_2$-$V_2O_5$, $SiO_2$-$Cr_2O_3$, $SiO_2$-$nO_2$-MgO can be exemplified. Above all, porous oxide comprising $SiO_2$ and/or $Al_2O_3$ as main component is preferable. Morphology of these porous oxides differ according to their kind and manufacturing method, however, fine particles preferably used in the invention is desirable to have diameter of 1 to 300 $\mu$m, preferably 3 to 100 $\mu$m, specific surface area of 50 to 1300 $m^2$/g, preferably 200 to 1200 $m^2$/g and pore volume of 0.3 to 3.0 $cm^3$/g. These carriers are used by firing at 100 to 1000°C, preferably at 150 to 700°C. Particulate morphology is not particularly limited, however, globular shape is preferable.

Clay used in the invention generally comprises clay mineral as main component. Not only natural product but also synthetic product can be used for these clay and clay mineral. For these clay and clay mineral, kaolin, bentonite, kibushi clay, gairome clay, allophane, hisingerite, pyrophyllite, mica group, montmorillonite group, vermiculite, chlorite group, palygorskite, kaolinite, nacrite, dickite, halloysite, etc. can be exemplified. Chemical treatment of these clay and clay mineral of the invention are also preferable. For said chemical treatment, any treatment, such as a surface treatment of removing impurities adhered on surface or a treatment effecting on crystal structure of the clay, can be used. For the chemical treatment, in particular, acid treatment, alkaline treatment, saline treatment, organic substance treatment, etc., can be exemplified. Above all, montmorillonite, vermiculite, pectolite, tainiolite and synthetic mica are preferable.

Above all, one or more compound selected from silica, alumina and clay mineral is preferably used for reasons of availability.

For "element of group 13 in periodic table" in (B) compound comprising element of group 13 in periodic table, used in process P1, boron and aluminum can be exemplified, and configurations of these compounds are not particularly limited, as far as they indicates Lewis acidity.

In the invention, (B) compound comprising element of group 13 in periodic table is preferably one or more compound selected from:

(b-1) Organic aluminum compound represented by the following general formula [II].

$R^1R^2R^3Al$ [II]

($R^1$, $R^2$ and $R^3$ in the above formula [II] can be the same or different, and each shows group selected from hydrogen atom, halogen atom or hydrocarbon group having 1 to 20 carbon atoms.)

(b-2) Organic aluminumoxy compound, and

(b-3) Organic boron compound.

For the organic aluminum compound (b-1) represented by the above general formula [II], trimethyl aluminum, triethyl aluminum, triisobutyl aluminum, diisobutyl aluminum hydride, tri-n-butyl aluminum, tri-n-hexyl aluminum, tri-n-octyl aluminum, ethyl aluminum dichloride and diethyl aluminum chloride can be exemplified.

Organic aluminumoxy compound (b-2) can be conventionally known aluminoxane or benzene insoluble organic aluminumoxy compound exemplified in Japanese Unexamined Patent Publication No. H02-78687.

Said conventionally known aluminoxane can be manufactured by the following methods, and generally obtained as a solution of hydrocarbon solvent.

(i) A reaction method of absorbed water or crystal water with organic aluminum compound by adding organic aluminum compound, such as trialkyl aluminum, to hydrocarbon medium suspension of a compound comprising absorbed water or a saline comprising crystal water, such as magnesium chloride hydrate, copper sulfate hydrate, aluminum sulfate hydrate, nickel sulfate hydrate and cerium (III) chloride hydrate.

(ii) A method wherein water, ice or water vapor directly reacts with organic aluminum compound, such as trialkyl aluminum, in a medium such as benzene, toluene, diethyl ether and tetrahydrofuran.

(iii) A reaction method wherein organotin oxide, such as dimethyl tin oxide and dibutyl tin oxide, reacts with organic aluminum compound, such as trialkyl aluminum, in a medium such as decane, benzene and toluene.

(iv) A reaction method wherein carboxyl group containing compound, such as carbon dioxide, benzoic acid and acetic acid, reacts with organic aluminum compound, such as trialkyl aluminum, in a medium such as benzene, toluene, hexane and decane.

Note that the above aluminoxane may comprise a small amount of organic metal component. Further, after removing solvent or unreacted organic aluminum compound from the above collected aluminoxane solution by distillation, it can be resolved in said solvent or suspended in poor solvent for aluminoxane. For the organic aluminum compound used for manufacturing aluminoxane, the organic aluminum compound exemplified for the above (b-1) can be used. Above all, trialkyl aluminum is preferable and trimethyl aluminum is more preferable. Said organic aluminum compound can be used alone or in a combination of two or more.

Benzene insoluble organic aluminumoxy compound used in the invention comprises generally 10% or less, preferably 5% or less and more preferably 2% or less of A1 component soluble in benzene of 60°C in terms of aluminum atom. Namely, organic aluminumoxy compound of the invention is preferably insoluble or poorly soluble in benzene.

Said organic aluminumoxy compound (b-2) can be used alone or in a combination of two or more.

Modified methylaluminoxane can further be exemplified for the organic aluminumoxy compound used in the invention. Said modified methylaluminoxane is an aluminoxane manufactured by using trimethyl aluminum and alkyl aluminum other than trimethyl aluminum. These compounds are generally called MMAO. MMAO can be manufactured by the methods described in U.S. Publication No. 4960878 and U.S. Publication No. 5041584. In fact, Tosoh Finechem Corporation and the others are in commercial production of MMAO. These MMAO are aluminoxane having improved solubility in various solvents and also preservation stability. To be more precise, these MMAO are different from the above organic aluminum compounds that are insoluble or poorly soluble in benzene, and are soluble in aliphatic hydrocarbon or alicyclic carbonhydrate.

Further, for organic aluminumoxy compound used in process P1 of the invention, organic aluminumoxy compound comprising boron atom can be exemplified.

For organic boron compound (b-3), in particular, Lewis acid, ionizable compound, borane compound and carborane compound described in Japanese Unexamined Patent Publication No. H1-501950, Japanese Unexamined Patent Publication No. H1-502036, Japanese Unexamined Patent Publication No. H3-179005, Japanese Unexamined Patent Publication No. H3-179006, Japanese Unexamined Patent Publication No. H3-207703, Japanese Unexamined Patent Publication No. H3-207704, WO1996/41808, US Patent No. 5321106, etc. can be exemplified. These boron compounds (b-3) can be used alone or in a combination of two or more.

Compound comprising element of group 13 in periodic table (B) , used in process P1 of the invention is preferably (b-1) organic aluminum compound represented by the above general formula [I] and/or (b-2) organic aluminumoxy compound, more preferably, combination of (b-1) organic aluminum compound and (b-2) organic aluminumoxy compound, the most preferably, (b-1) is triisobutyl aluminum and (b-2) is methyl aluminoxane. In process P1, when (b-1) organic aluminum compound and (b-2) organic aluminumoxy compound are used in combination, their amounts with respect to inorganic fine particles (A) are usually 0.5 to 30 wt% of component (b-1) and 10 to 200 wt% of component (b-2), and preferably, 3 to 20 wt% of (b-1) and 50 to 150 wt% of (b-2).

When contacting one or more compound selected from the components (b-1), (b-2) and (b-3) to inorganic fine particles (A) in the presence of hydrocarbon media, an example of its method and temperature are as following. When using components (b-1) and (b-2), they are added together or individually at -78 to 100°C and said contact is carried out at 0 to 130°C, preferably, they are added individually at -10 to 70°C and the contact is carried out at 50 to 120°C. Hydrocarbon solvent is generally used when contacting inorganic fine particles (A) and component (B). The hydrocarbon solvents are preferably aromatic hydrocarbon such as toluene, xylene and benzene, saturated hydrocarbon such as hexane, heptane, decane and cyclohexane, ether type solvent such as tetrahydrofuran, di-isopropylether and halogenated hydrocarbon such as chloroform and chlorobenzene, more preferably, aromatic hydrocarbon such as toluene and xylene and saturated aliphatic hydrocarbon such as hexane, heptane and decane. When using these solvents, their amounts are generally 1 to 100 times, preferably 2 to 20 times larger than that of inorganic fine particles (A). Further, said solvent can be added independently at the contact, or in a form of diluent solvent of component (B).

Process P2 is a contacting process of suspension obtained by said process P1 with (C) compound comprising oxyalkylene skeleton, (D) metallocene compound and, optionally, (B) compound comprising element of group 13 in periodic table in random order. From the view point of polymerization activity and an ability to inhibit fouling, preferable contacting order is as follows: contacting the suspension obtained by process P1 with (B) compound comprising element of group 13 in periodic table, when required, and then with (C) compound comprising oxyalkylene skeleton and (D) metallocene compound in random order. From the view point of the same, more preferable contacting order is as follows: contacting the suspension obtained by process P1 with (C) compound comprising oxyalkylene skeleton, and then, adding a mixture obtained by preliminarily contacting (B) compound comprising element of group 13 in periodic table and (D) metallocene compound.

Note that said component (B) is preferably used in process P2 when preparing solid catalyst for manufacturing propylene based polymer particle, while said component (B) is not essential in process P2 when preparing solid catalyst for manufacturing ethylene based polymer particle.

Compound comprising element of group 13 in periodic table (B) used in process P2 can be the same with (B) compound comprising element of group 13 in periodic table used in process P1. (B) Compound comprising element of group 13 in periodic table used in process P2 is preferably component (b-1), organic aluminum compound represented by the above general formula [II], alone and more preferably, said component (b-1) is triisobutyl aluminum.

Compound comprising oxyalkylene skeleton (C) used in process P2 preferably has a configuration wherein ether oxygen atom of oxyalkylene skeleton represented by the above general formula [I] is bonded with hydrogen atom. More preferably, compound having one or more skeleton represented by the following general formulas [III], [IV] or [V] within its molecule can be used as said compound (C) without any limitation.

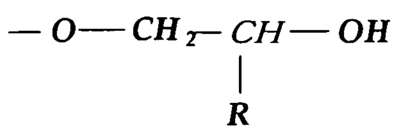

------ [III]

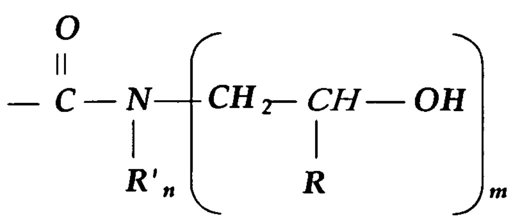

------ [IV]

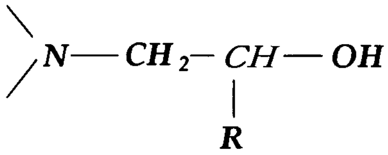 [V]

In above general formulas [III], [IV] and [V], R is hydrogen atom or alkyl group having 1 to 12 carbon atoms. For alkyl group having 1 to 12 carbon atoms, linear or branched alkyl groups such as methyl group, ethyl group, n-propyl group, isopropyl group, n-butyl group, isobutyl group, sec-butyl group, tert-butyl group, n-pentyl group, n-hexyl group, n-heptyl group, n-octyl group and n-nonyl group can be exemplified. Compound including oxyalkylene skeleton wherein R is methyl group is preferably used, since it is superior in polymerization activity and has an inhibitory effect on fouling. Further, in the above general formula [IV], R' is atom or group similar to the above R, n is 0 or 1, and sum of n and m is 2. From the viewpoint of polymerization activity and inhibitory effect on fouling, m is preferably 2.

For compound including skeleton represented by the general formula [III], polyoxyalkylene based compound represented by the following general formula [VI] can be exemplified.

$$R^2\text{-O-}[CH_2\text{-}CH(R^b)\text{-O}]_k\text{-H} \qquad [VI]$$

In the above general formula [VI], $R^b$ is hydrogen atom or alkyl group having 1 to 12 carbon atoms and $R^a$ is selected from hydrogen atom, alkyl group having 1 to 20 carbon atoms, aryl group having 6 to 20 carbon atoms and acyl group having 1 to 20 carbon atoms. "k" is a number of average repeating unit, which is within 1 to 100. For these polyoxyalkylene compounds, in particular, triethylne glycol, tetraethylene glycol, hexaethylene glycol, heptaethylene glycol, polyethylene glycol, triethylene glycol monoalkyl ether, tetraethylene glycol monoalkyl ether, hexaethylene glycol monoalkyl ether, heptaethylene glycol monoalkyl ether, polyethylene glycol monoalkyl ether, triethylene glycol monoalkyl ester, tetraethylene glycol monoalkyl ester, hexaethylene glycol monoalkyl ester, heptaethylene glycol monoalkyl ester, polyethylene glycol monoalkyl ester, triethylene glycol dialkyl ester, tripropylene glycol monoalkyl ether, tetrapropylene glycol monoalkyl ether, hexapropylene glycol monoalkyl ether, heptapropylene glycol monoalkyl ether, polypropylene glycol monoalkyl ether, etc. further, tetraethylene glycol monoacrylate, hexaethylene glycol monoacrylate, heptaethylene glycol monoacrylate, polyethylene glycol monoacrylate, triethylene glycol monomethacrylate, tetraethylene glycol monomethacrylate, hexaethylene glycol monomethacrylate, heptaethylene glycol monomethacrylate, polyethylene glycol monomethacrylate, polyoxyethylene lauryl ether, polyoxyethylene oleyl ether, polyoxyalkylene lauryl ether, polyoxyethylene isodecyl ether, polyoxyethylene alkyl ether, polyoxyalkylene alkyl ether, polyoxyethylene castor oil, polyoxyethylene-cured castor oil, polyoxyethylene styrenated phenyl ether, polyoxyethylene oleic acid ester, polyoxyethylene distearic acid ester, polyoxyalkylene glycol, sorbitan sesquioleate, sorbitan monooleate, sorbitan monostearate, sorbitan monolaurate, polyoxyethylene sorbitan monolaurate, polyoxyethylene sorbitan monostearate, polyoxyethylene sorbitan monooleate, polyoxyethylene lanolin alcohol ether, polyoxyethylene lanolin aliphatic acid ester, polyoxyethylene alkylamine ether, polyethylene glycol alkyl ether, polyethylene glycol monolaurate, polyethylene glycol monostearate, polyethylene glycol monooleate, polyethylene glycol sorbitan monlaurate and polyethylene glycol sorbitan monooleate can be exemplified. These polyoxyalkylene compounds can be used alone or in a combination of two or more.

For reasons of availability, inhibitory effect on fouling, etc., polyoxyalkylene glycol represented by the following general formula [VII] is often used in examples discussed below, however, (C) compound comprising oxyalkylene skeleton of the invention is not particularly limited to the compound.

$$HO\text{-}(CH_2CH_2O)_m\text{-}[CH_2CH(R^c)O]_n\text{-}(CH_2CH_2O)_pH \qquad [VII]$$

In the above general formula [VII], m, n and p are numbers of an average repeating unit, m=1 to 20, n=2 to 50 and p=1 to 20. $R^c$ is alkyl group having 1 to 10 carbon atoms, and for reasons of availability, methyl group is preferably used. In the above general formula [VII], the sum (m+p) of m and p, representing a number of repeating oxyethylene unit expressed by ($CH_2CH_2O$) is within 2 to 40, preferably 4 to 20 and more preferably 4 to 15. Ratio (m/p) of said repeating unit number is 0.1 to 10, preferably 0.5 to 5. While n is a number of repeating oxyalkylene unit expressed by [$CH_2CH(Rc)O$], and is preferably within 10 to 50, and more preferably within 20 to 50.

As a compound including skeleton represented by general formula [IV], aliphatic diethanolamide represented by the following general formula [VIII] can be preferably exemplified.

$$(C_mH_{2m+1}CO)N(CH_2CH_2OH)_2 \qquad [VIII]$$

In the above general formula [VIII], m is within 1 to 30, preferably 6 to 20, and more preferably 7 to 17.

Preferable examples for these aliphatic diethanolamides are hexanoic acid diethanol amide, heptanoic acid diethanol amide, octanoic acid diethanol amide, nonanoic acid diethanol amide, decanoic acid diethaol amide, undecanoic diethanol amide, lauric acid diethanol amide, tridecylic acid diethanol amide, myristic acid diethanol amide, pentadecylic acid diethanol amide, palmitic acid diethanol amide, heptadecanoic acid diethanol amide, stearic acid diethanol amide, etc. Above all, lauric acid diethanol amide is particularly preferable. Further, other than the aliphatic diethanolamide, aliphatic acid dimethanol amide, aliphatic acid monomethanol amide, aliphatic monoethanol amide and aliphatic monopropanol amide can be exemplified. These aliphatic amides can be used alone or in a combination of two or more.

As compound including skeleton represented by general formula [V], tertiary amine compound represented by the following general formula [IX] can be exemplified.

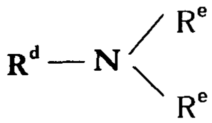 ---------- [IX]

In the above general formula [IX], $R^d$ is hydrogen atom, or a linear or branched alkyl group having 1 to 50 carbon atoms and Re is hydroxyalkyl group such as $(CH_2)$xOH group (in the formula, x is an integer within 1 to 50, preferably 2 to 25). These compounds can be, "Kemamine AS-990" including $C_{18}H_{37}N(CH_2CH_2OH)_2$ commercially available from Witco Chemical Corporation at Houston, TX., "Kemamine AS-650" including $C_{12}H_{25}N(CH_2CH_2OH)_2$ commercially available from said Witco, "Atmer 163" commercially available from ICI specialties, and "polyoxyethylene (10) stearylamine ether" commercially available from Wako Pure Chemical Industries, Ltd., however, said compounds are not limited the above products.

Compound comprising oxyalkylene skeleton (C) is used in an amount of 0.1 to 10 wt%, more preferably 0.3 to 5 wt%, with respect to solid amount in suspension obtained by process P1, is used. The temperature during addition is -78 to 100°C, more preferably 0 to 70°C and mixing time for the contact is 1 minute to 10 hours, preferably 10 minutes to 3 hours. Polyoxyalkylene compound in use can be diluted in solvent. Said solvent is preferably aromatic hydrocarbon such as toluene, xylene and benzene, saturated hydrocarbon such as hexane, heptane, decane and cyclohexane, ether type solvent such as THF and di-isopropylether and halogenated hydrocarbon such as chloroform and chlorobenzene, more preferably, aromatic hydrocarbon such as toluene and xylene and saturated aliphatic hydrocarbon such as hexane, heptane and decane. Note that "dilute" in the invention includes a mixture form of (C) compound comprising oxyalkylene skeleton and a liquid inactive to said compound (C), and also a dispersed form of said compound (C) in said liquid. Namely, "dilute" is solution or dispersion form, more precisely, solution, suspension or emulsion form. Above all, it is preferable that (C) compound comprising oxyalkylene skeleton and solvent are mixed to be in a solution form.

(D) metallocene compound used in process P2 is transition metal compound comprising ligand having cyclopentadienyl skeleton within its molecule. Said transition metal compound comprising ligand having cyclopentadienyl skeleton within its molecule is classified into three groups by their chemical structure: metallocene compound (D1) represented by the following general formula [X], bridged metallocene compound (D2) represented by the following general formula [XI] and geometrically constrained compound (D3) represented by the following general formula [XII]. Among the three, metallocene compound (D1) and bridged metallocene compound (D2) are preferable; further, metallocene compound (D2) is the most preferable.

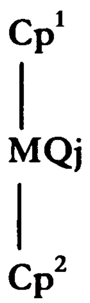 ----- [X]

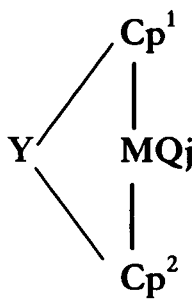 ----- [XI]

[In the above general formulas [X] and [XI], M is titanium atom, zirconium atom or hafnium atom, Q is selected

from halogen atom, hydrocarbon group, anion ligand and neutral ligand, possible to coordinate with its lone electron pair, j is an integer within 1 to 4 and $Cp^1$ and $Cp^2$ can be the same or different and are cyclopentadienyl or substituted cyclopentadienyl group which can form sandwich structure together with M. Note that the substituted cyclopentadienyl group includes indenyl group, fluorenyl group and substituted thereof with one or more hydrocarbyl group. Double bonds of benzene skeleton in said indenyl group or fluorenyl group condensing to cyclopentadienyl group can be partially hydrogenerated. In general formula [XI], Y is divalent hydrocarbon group having 1 to 20 carbon atoms, divalent halogen hydrocarbon having 1 to 20 carbon atoms, divalent silicon containing group, divalent germanium containing group, divalent tin containing group, -O-, -CO-, -S-, -SO-, $-SO_2-$ -Ge-, -Sn-, $-NR^a-$, $-P(R^a)-$, $-P(O)(R^a)-$, $-BR^a-$ or $-AlR^a$. (Note that each $R^a$ can be the same or different, and is hydrocarbon group having 1 to 20 carbon atoms, halogenated hydrocarbon group having 1 to 20 carbon atom, hydrogen atom, halogen atom or nitrogen compound residue wherein one or two hydrocarbon group having 1 to 20 carbon atoms are bonded to nitrogen atom.)]

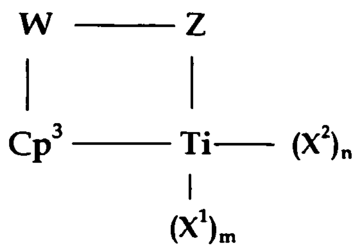

------ [XII]

[In the above general formula [XII], Ti is +2, +3 or +4 oxidation state of titanium atom and $Cp^3$ is cyclopentadienyl or substituted cyclopentadienyl group forming η bond to titanium atom. $X^1$ is an anionic ligand and $X^2$ is a neutral conjugated diene compound. n+m is 1 or 2, Z is -O-, -S-, $-NR^b-$, or $-PR^b-$, W is $SiR^b_2$, $CR^b_2$, $SiR^b_2-SiR^b_2$, $CR^b_2-CR^b_2$, $CR^b=CR^b$, $CRb^2-SiR^b_a$, $G_{eR}{}^b{}_2$, $BR^b_2$, and $R^b$ is selected from hydrogen atom, hydrocarbyl group, silyl group, germyl group, cyano group, halogen atom, a combination thereof and said combination having up to 20 nonhydrogen atoms. For substituents group of cyclopentadienyl, there can be mentioned cyclopentadienyl group, indenyl group, tetrahydro indenyl group, fluorenyl group or octafluorenyl group substituted with one or more substituent selected from hydrocarbyl group having 1 to 20 carbon atoms, halohydrocarbyl group having 1 to 20 carbon atoms, halogen atom or group 14 metalloid group substituted with hydrocarbyl group having 1 to 20 carbon atoms. Above all, cyclopentadienyl group substituted with alkyl group having 1 to 6 carbon atoms is preferable. In the above general formula [XII], when n is 2, m is 0 and oxidation number of titanium is +4, $X^1$ is selected from halogen atom alkyl group or aralkyl group having 1 to 20 carbon atoms such as, methyl group or benzyl group; when n is 1, m is 0 and oxidation number of titanium is +3, $X^1$ is 2-(N, N-dimethyl) aminobenzyl, when n is 1, m is 0 and oxidation number of titanium is +4, $X^1$ is 2-butene-1,4-diyl, and further, when n is 0, m is 1 and oxidation number of titanium is +2, $X^2$ is selected from diene-modified compounds such as 1,4-diphenyl-1,3-butadiene and 1,3-pentadiene.]

Metallocene compounds used in examples described below are the compounds represented by the following general formulas [XIII], [XIV] and [XV], however, the present invention is not limited to those compounds used in said examples.

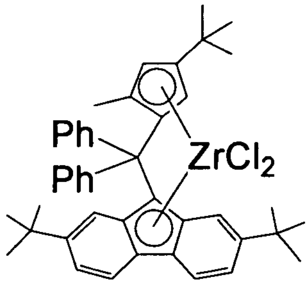

...... [XIII]

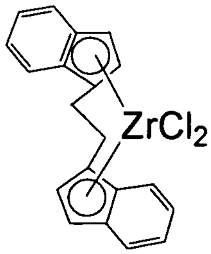

...... [XIV]

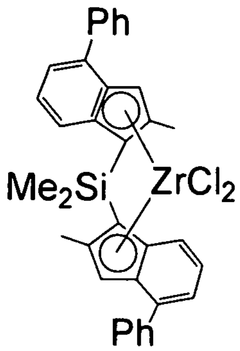

........ [XV]

Metallocene compound (D) is added in an amount of 0.1 to 10 wt%, more preferably 0.3 to 5 wt% with respect to solid part in suspension, obtained by process P1, and then mixed for a contact. Temperature during addition and mixing for contact is -78 to 100°C, more preferably 0 to 80°C and mixing time for the contact is 1 minute to 10 hours, preferably 10 minutes to 3 hours. Metallocene compound in use can be diluted in solvent. Said solvent can be aromatic hydrocarbon such as toluene, xylene and benzene, saturated hydrocarbon such as hexane, heptane, decane and cyclohexane, ether type solvent such as THF and di-isopropylether and halogenated hydrocarbon such as chloroform and chlorobenzene, preferably, aromatic hydrocarbon such as toluene and xylene and saturated hydrocarbon such as hexane, heptane, decane and cyclohexane.

Metallocene compound (D) can be brought into a contact with component (B), compound comprising element of group 13 in periodic table, in advance. When said preliminary contact is performed, component (B) is preferably (b-1) organic aluminum compound, more preferably, triisobutyl aluminum. Preliminary contact of (D) metallocene compound and (B) compound comprising element of group 13 in periodic table can be carried out in a solvent. Said solvent is preferably the same with the above-mentioned solvent used for diluting metallocene compound and aromatic hydrocarbon such as toluene and xylene, and saturated hydrocarbon such as hexane, heptane, decane and cyclohexane are particularly preferable.

Further, the other embodiment of the present invention relates to solid catalyst (K') for olefin polymerization wherein the solid catalyst (K) for olefin polymerization is pre-polymerized with one or more olefin selected from ethylene and α-olefin having 3 to 8 carbon atoms.

Ethylene or α-olefin having 3 to 8 carbon atoms can be exemplified for olefin used in said pre-polymerization. For said α-olefins having 3 to 8 carbon atoms, propylene, 1-butene, 2-butene, 1-pentene, 3-methyl-1-butene, 3-methyl-1-pentene, 3-ethyl-1-pentene, 1-hexene, 4-methyl-1-pentene, 4-methyl-1-hexene, 4,4-dimethyl-1-hexene, 4,4-dimethyl-1-pentene, 4-ethyl-1-hexene, 3-ethyl-1-hexene and 1-octene are particularly exemplified. Above all, ethylene, propylene, 1-hexene, 3-methyl-1-butene and 4-methyl-1-pent are preferable. Two or more kinds of said olefin can be copolymerized. Further, one or more kind of said olefin can be polymerized in advance, and then, polymerized with the other olefin.

Phase state for pre-polymerization is not particularly limited, however, liquid phase polymerization is preferably used. Preferable solvent for said liquid-phase polymerization is saturated hydrocarbon such as propane, butane, hexane, cyclohexane, heptane and decane, aromatic hydrocarbon such as toluene and xylene, α-olefin itself or mixture thereof.

Further, pre-polymerization can be carried out in the presence of organic aluminum compound, when required. Preferable organic aluminum compound is the same compound exemplified in (b-1), and above all, triisobutylaluminum, triethylaluminum, diisobutylaluminum hydride are more preferable examples. Concentration of these in polymerization reaction is preferably 0.001 to 1000 mmol/L, more preferably 0.01 to 200 mmol/L.

Pre-polymerized amount with respect to 1g of solid catalyst (K) for olefin polymerization is preferably 0.1 to 1000g, more preferably 0.5 to 500g, the most preferably 1 to 200g.

(2) Olefin Polymerization Method

Polymerization method of the invention is characterized in polymerizing one or more kind of polymerizable monomer selected from ethylene and olefin having 3 to 12 carbon atoms in the presence of the solid catalyst (K) for olefin polymerization or pre-polymerized solid catalyst (K') and, optionally, (B) compound comprising element of group 13 in periodic table.

For (B) compound comprising element of group 13 in periodic table, organic aluminum compound represented by the above general formula [II] is preferable, and triethylaluminum and triisobutylaluminum are particularly preferable. Concentration of component (B) in polymerization reaction is preferably 0.001 to 1000 mmol/L, more preferably 0.01 to 200 mmol/L.

Olefin having 3 to 12 carbon atoms used in the invention can be propylene, 1-butene, 1-pentene, 3-methyl-1-butene, 1-hexene, 4-methyl-1-pente 3-methyl-1-pentene, 1-octene, 1-decene, 1-dodecene, etc. Polymerizable monomer used in the invention is generally one or more kind selected from ethylene, propylene, 1-butene, 1-hexene, 4-methyl-1-pent and 1-octene.

One embodiment of preferable polymerization method of the invention is to use polymerizable monomer comprising propylene as an essential component and preferably as a main component, and also one or more optional component selected from ethylene and α-olefin having 4 to 10 carbon atoms. Two or more kinds of said α-olefin can be used simultaneously for copolymerization. Further, after manufacturing a (co)polymer having certain composition, the other (co)polymer having different composition can be subsequently manufactured. An example for such continuous manufacturing of two or more kinds of (co)polymers, each having different composition, can be block copolymer wherein noncrystalline propylene (co)polymer is manufactured subsequently after crystalline propylene (co)polymer is manufactured. Note that "propylene is a main component" defines that propylene concentration with respect to all the polymerizable monomer is 50 mole% or more.

The other embodiment of preferable polymerization method of the invention is to use polymerizable monomer comprising ethylene as an essential component and preferably as a main component, and also one or more optional component selected from α-olefin having 3 to 10 carbon atoms. Two or more kinds of said α-olefin can be used simultaneously for copolymerization. Note that "ethylene is a main component" defines that ethylene concentration with respect to all the polymerizable monomer is 50 mole% or more.

The invention can be carried out by a liquid-phase polymerization such as solution polymerization and suspension polymerization or a gas phase polymerization. The followings can be particularly exemplified for inert hydrocarbon media used in liquid phase polymerization: aliphatic hydrocarbon such as propane, butane, pentane, hexane, heptane, octane, decane, dodecane, and kerosene; alicyclic hydrocarbon such as cyclopentane, cyclohexane, methyl cyclopentane; aromatic hydrocarbon such as benzene, toluene and xylene; halogenated hydrocarbon such as ethylene dichloride, chlorobenzene and dichloromethane, and mixture thereof. Further, liquefied olefin itself can be used as a solvent, for so-called a bulk polymerization. From the viewpoint of decreasing polymerization activity and inhibiting fouling, the invention is preferably used in bulk polymerization, suspension polymerization and gas phase polymerization.

Polymerization using solid catalyst (K) for olefin polymerization and pre-polymerized solid catalyst (K') is carried out by using the component (K) or (K') in an amount of all the transition metal atom of generally $10^{-10}$ to $10^{-2}$ mole, preferably $10^{-9}$ to $10^{-3}$ mole per reacting volume of 1 litter. Polymerization temperature is generally within -50 to +200°C, preferably 0 to 170°C. Polymerization pressure is generally under normal pressure to 10 MPa gauge pressure, preferably

under normal pressure to 5 MPa gauge pressure. Polymerization reaction can be carried out by any of the following methods: batch-wise method, semicontinuous method and continuous method. Polymerization reaction can be carried out by two or more processes each having different conditions in reaction.

Molecular weight of the obtained polymer can be adjusted by the presence of hydrogen molecule or by varying polymerization temperature. When adding the hydrogen molecule, its amount is suitably around 0.001 to 100 NL per 1kg of the obtained polymer.

(3) Olefin Polymer Particle

One of the preferred embodiments of olefin polymer particle of the invention is propylene based polymer particle comprising 50 to 100 mole % of repeating unit (U1) derived from propylene and 0 to 50 mole % of repeating unit (U2) derived from one or more olefin selected from ethylene and α-olefin having 4 to 10 carbon atoms. Propylene based polymer particle is **characterized in that** bulk density is 0.30 (g/ml) or more, preferably 0.35 (g/ml) or more, more preferably 0.38 (g/ml) or more. Said propylene based polymer particle is further **characterized in that** its melting point (Tm) is 130°C or less, preferably 128°C or less, more preferably 120°C or less, or it comprises 5 wt% to 80 wt%, preferably 8 wt% to 65 wt% of noncrystalline propylene based copolymer with respect to all olefin polymer.

The other preferable embodiment of an olefin polymer particle of the invention is ethylene based polymer particle comprising 50 to 100 mole % of repeating unit (U3) derived from ethylene and 0 to 50 mole % of repeating unit (U4) derived from one or more olefin selected from α-olefin having 3 to 10 carbon atoms. Density of ethylene based polymer particle of the invention is 870 to 1000 $kg/m^3$, preferably 890 to 985 $kg/m^3$, more preferably 895 to 980 $kg/m^3$.

An olefin polymer particle of the invention is **characterized in that** they have a good fluidity. Carr index [Chem. Eng., 72, 163 (1965)] is known for an indicator of said fluidity, which comprehensively evaluate repose angle, degree of compression, spatula angle and uniformity.

An olefin polymer particle of the invention is **characterized in that** its repose angle is 10° to 50°, preferably 20° to 45°, more preferably 23° to 40°; degree of compression is generally 1 % to 25 %, preferably 3 % to 20 %, more preferably 4 % to 15 %; spatula angle is generally 10° to 60°, preferably 20° to 55°, more preferably 25° to 45°; and uniformity is generally 1 to 12, preferably 1 to 8, more preferably 1 to 5.

An olefin polymer particle of the invention is **characterized in that** it shows 70 to 100, preferably 80 to 100 of Carr index.

An olefin polymer particle of the invention is **characterized in that** it is superior in flexibility, transparency and heat seal property and suitably used for film, sheet, stretch tape, fabric, etc.

[Examples]

Below, the present invention will be explained in further detail according to examples however, the invention is not limited to these examples. Manufacturing examples of catalyst and polymerization examples described below is carried out in dry nitrogen atmosphere unless otherwise mentioned. Note that, in examples, each property was measured as described below.

[Melting Point (Tm), Heat Amount of Melting (ΔH)]

With Diamond DSC by Perkin Elmer Co., under nitrogen atmosphere (20ml/min.), temperature of about 5 mg of sample was raised to 230°C, held for 10 minutes and cooled to 30°C at a rate of 10°C/minute. The sample was held at 30°C for a minute and temperature was raised to 230°C at a rate of 10 °C/minute, then melting point was calculated from vertex of crystal molten peak and heat amount of melting was calculated from integrated value of said peak.

[Molecular Weight Distribution (Mw/Mn)]

Gel permeation chromatograph, Alliance GPC-2000 by Waters Co., was used as described below to measure molecular weight distribution (Mw/Mn). Separation columns were two of TSKgel GNH6-HT and two of TSKgel GNH6-HTL. All the column had diameter of 7.5 mm and length of 300 mm and column temperature was 140°C. O-dichlorobenzene (Wako Pure Chemical Industries Ltd.) was used as moving phase and 0.025 wt% of BHT (Takeda Pharmaceutical Co. Ltd.) as antioxidant, moving speed was 1.0 ml/minute, sample concentration was 15 mg/10 ml, poured amount of sample was 500 microliters and differential refractometer was used for detector. For standard polystyrenes having a molecular weight of $Mw<1000$ and $Mw>4\times10^6$, Tosoh Co. products were used, while $1000\leq Mw\leq 4\times10^6$, Pressure Chemical Co. product was used.

[Intrinsic Viscosity (η)]

A value measured by using decalin solvent at 135°C. Namely, 20 mg of polymerization powder or resin in aggregated form was dissolved in 15 ml of decane and specific viscosity $\eta_{sp}$ was measured in oil bath of 135°C. 5 ml of decaline solvent was further added to the above decaline solution for dilution, and then $\eta_{sp}$ was measured by the same. Said dilution was repeated twice and a value of $\eta_{sp}/C$, wherein concentration (C) is extrapolated to be 0, was obtained as intrinsic viscosity (See the following equation.).

$$(\eta) = \lim (\eta_{sp}/C) \quad (C \rightarrow 0)$$

[MFR]

MFR was measured by using MFR device of TP-406 by Tester Sangyo Co. Ltd., adding BHT as a stabilizer and with 6 minutes of preliminary heating at 230°C and 2.16 kgf load.

[Coarse Particle Amount]

Propylene based polymer: Polymer particles were oscillated on sieve having 1 mm openings and wt% of polymer remained on the sieve were weighed.
Ethylene based polymer: Polymer particles were oscillated on sieve having 1.7 mm openings and wt% of polymer remained on the sieve were weighed.

[Bulk Density]

Bulk density was measured based on ASTM D 1895-96 A method.

[Ethylene Content]

By using fourier transform infrared spectrometer FT/IR-610 by JASCO CO., area around 733cm$^{-1}$ arose from horizontal vibration of methylene group and absorbance around 4325 cm$^{-1}$ arose from overtone absorption of C-H stretching vibration were obtained, and then ethylene content was calculated from their ratio by using analytical curve (drawn by standard sample standardized by $^{13}$C-NMR).

[Repose Angle, Degree of Compression and Spatula Angle]

The above characteristics were measured with Multi Tester MT-1001, a multifunctional measurement device designed to measure the characteristics of powder materials, by Seishin Enterprise Co. Ltd.

[Uniformity]

Particle size distribution was measured with particle analysis device of Microtac 9320-X100 by Leeds & Northrup, by using methanol as a dispersant and dispersing with ultrasonic homogenizer in the device for 5 minutes (Output of 25W). Uniformity was calculated from the result and the following formula.

$$\text{Uniformity} = D_{p60} / D_{p10}$$

$D_{p60}$= particle diameter reaching cumulative weight of 60% from smaller diameter in particle size distribution

$D_{p10}$= particle diameter reaching cumulative weight of 10% from smaller diameter in particle size distribution

[Density]

By using hydraulic heat pressing machine by SHINTO Metal Industries Co. set at 190°C, a sheet having 0.5 mm thickness was formed under pressure of 100 kg/cm$^2$ (spacer formation: 9 pieces of 45×45×0.5 mm were formed

from 240×240×0.5 mm plate), and then, samples for measurement were manufactured by cooling said sheets under pressure of 100 $kg/cm^2$ by using the other hydraulic heat pressing machine by SHINTO Metal Industries Co. set at 20°C. For heat plate, SUS plate having 5 mm thickness was used.
This press sheet was heat treated at 120°C for one hour, gradually cooled to room temperature for one hour in a linear manner, and then measured by density gradient tube.

[Loss of Ignition]

Measurement was performed by using differential thermal gravimetric analysis TG 8120 by Rigaku Co. Ltd. Alumina was used for a reference material. About 10 mg of sample was weighed in the atmosphere and its temperature was raised to 600°C at a rate of 5°C/minute, and then, held for 30 minutes at 600°C. Weight of said sample at 200°C was considered as standard weight and reduction ratio (wt%) from 200°C to 600°C was determined to be loss of ignition

[Elemental Analysis]

ICP (Inductively Coupled Plasma) emission spectrometer analytical instrument of ICPS-8100 by Shimadzu Co. was used for the measurement. Quantitative and qualitative analyses of aluminum and those of zirconium were performed by assay solution obtained by wet-degrading samples by sulfuric and nitric acids and specifying its volume (including filtration and dilution when required). Further, quantitative and qualitative analyses of silicon were performed by assay solution obtained by melting samples in sodium carbonate, adding hydrochloric acid to dissolve, and specifying its volume and diluting.

EXAMPLE 1

-Manufacturing solid catalyst (K) for olefin polymerization.

[Process P1]

5.01 g of silica gel (trade name: H-122 by Asahi SI Tech Co., Ltd.) dried at 200°C under nitrogen atmosphere and 44 ml of dehydrated toluene were added to 100 ml of four-neck flask, sufficiently substituted with nitrogen and equipped with stirring rod, and then, heated to 50°C with oil bath. 2.5 ml of toluene solution (1M) of triisobutyl aluminum was added, and then, 19.0 ml of toluene solution of methylaluminoxane (9.1 wt% aluminum concentration by Tosoh Finechem Co.) was further added. 30 minutes reaction at 50°C, and then 4 hours reaction at 95°C were performed. After leaving at rest at 60°C, 36 ml of supernatant solution was removed by decantation, and then, toluene slurry of silica supporting methylaluminoxane was obtained.

[Process P2]

Toluene slurry of silica supporting methylaluminoxane obtained in the above process P1 was kept at 35°C and 10 ml of hexane followed by 20 ml of hexane solution including 1.5 wt% polyalkylene oxyglycol (trade name: ADEKA Pluronic L-71 by ASAHI DENKA Co., Ltd.) were added. After 45 minutes reaction, a preliminary mixed mixture including 149mg of transition metal compound of diphenylmethylene (3-tert-butyl-5-methyl-cyclopentadienyl)(2,7-di-tert-butyl-fluorenyl)zirco-niu m dichloride (manufactured by the method described in WO2004/087775), 1.86 ml of toluene solution of triisobutylaluminum (1M) and 4ml of hexane were added. After one hour reaction, the obatained slurry was filtered with membrane filter. The obtained powder was dried under reduced pressure for 2 hours and 9.45 g of powdery solid catalyst (K) was obtained. Said catalyst (K) was mixed with dehydrated liquid paraffin to obtain 20.0 wt% slurry. As a result of analysis, zirconium in said powder was 0.17 wt% and aluminum was 17.6 wt%. A loss of ignition was 13.5 wt%. Peaks of silicon and aluminum elements were confirmed by element analysis of residue after ignition.

EXAMPLE 2

Except for using silicagel (trade name: H-122 by Asahi SI Tech Co., Ltd.) wherein fine particles having diameter of 4μm or less are eliminated by classification and 16.8 ml of toluene solution of methylaluminoxane, the same manufacturing method was performed as in example 1. As a result of analysis, zirconium in said powder was 0.18 wt%, aluminum was 16.7 wt% and silicon was 23.2 wt%. A loss of ignition was 14.1 wt%. Peaks of silicon and aluminum elements were confirmed by element analysis of residue after ignition.

EXAMPLE 3

-Manufacturing solid catalyst (K') for olefin polymerization -

10.02 g of liquid paraffin slurry manufactured in example 2, 6.51 g of filtrate filtered by membrane filter and 30 ml of hexane were added to 200 ml flask and heated to 34°C. 2.0 ml of 1 mol/L hexane solution of triisobutylaluminum, 2.0 ml of 10 g/L hexane solution of polyalkylene oxyglycol (trade name: ADEKA Pluronic L-71 by ASAHI DENKA Co., Ltd.) were further added. Ethylene was blown into gas phase part at a rate of 1.5 NL/h and polymerized for 4 hours at 35°C. Residue ethylene was purged with nitrogen and then, the obtained slurry was filtered with membrane filter. The obtained powder was dried under reduced pressure for 3 hours and 7.56 g of solid catalyst (K') was obtained.

EXAMPLE 4

- Homo-Polymerization of Propylene (1) -

Magnetic stirring bar was put into 50 ml side-arm flask, sufficiently substituted with nitrogen. 803 mg of slurry of solid catalyst (K) prepared in the above example 1, 1.0 mmol of hexane solution (Al=1.0M) of triisobutylaluminum and 5.0 ml of dehydrated hexane were added to said flask and put into 2000 ml internal capacity autoclave made of SUS which was sufficiently substituted with nitrogen. 500 g of liquid propylene was charged and 40 minutes of polymerization was performed at 70°C. The autoclave was cooled and propylene was purged in order to stop polymerization. The obtained polymer was dried under reduced pressure for 10 hours at 80°C.
The obtained polymer was 125.8 g of isotactic polypropylene and its polymerization activity was 62.3 kg-PP/mmol-Zr·hr. As a result of polymer analysis, (η)=3.27 dl/g, MFR=0.30 g/10 minutes, bulk density was 0.49 g/cm$^3$ and coarse particle amount was 2.2 wt%. Note that adherence was not observed in the autoclave.

EXAMPLE 5

- Homo-Polymerization of Propylene (2) -

Except for adding 352 mg of slurry of solid catalyst (K) prepared in the above example 1 and further adding 0.08NL of hydrogen after 500 g of liquid propylene was charged, the same polymerization was performed as in the above example 4.
The obtained polymer was 160.2 g of isotactic polypropylene and its polymerization activity was 181 kg-PP/mmol-Zr·hr. As a result of polymer analysis, (η)=2.30 dl/g, MFR=2.38 g/10 minutes, bulk density was 0.50 g/cm$^3$ and coarse particle amount was 0.11 wt%. Uniformity was 2, repose angle was 28°, degree of compression was 10%, spatula angle was 30° and Carr index was 93.5. Note that adherence was not observed in the autoclave.

EXAMPLE 6

- Homo-Polymerization of Propylene (3) -

Magnetic stirring bar was put into 50 ml side-arm flask, sufficiently substituted with nitrogen. 802 mg of slurry of solid catalyst (K) prepared in the above example 2, 1.0 mmol of hexane solution (Al=1.0M) of triisobutylaluminum and 5.0 ml of dehydrated hexane were added to said flask and put into 2000 ml internal capacity autoclave made by SUS which was sufficiently substituted with nitrogen. 500 g of liquid propylene was charged and 40 minutes of polymerization was performed at 70°C. The autoclave was cooled and propylene was purged in order to stop polymerization. The obtained polymer was dried under reduced pressure for 10 hours at 80°C.
The obtained polymer was 143.1 g of isotactic polypropylene and its polymerization activity was 66.1 kg-PP/mmol-Zr·hr. As a result of polymer analysis, (η)=3.18 dl/g, MFR=0.32 g/10 minutes, Mw=558,000, Mw/Mn=3.1, Tm=144.0°C, ΔH=86.0 J/g, bulk density was 0.50 g/cm$^3$ and coarse particle amount was 0.0 wt%. Note that adherence was not observed in the autoclave.

EXAMPLE 7

- Homo-Polymerization of Propylene (4) -

Except for adding 356 mg of slurry of solid catalyst (K) prepared in the above example 2 and further adding 0.08NL of hydrogen after 500 g of liquid propylene was charged, the same polymerization was performed as in the above

example 6.
The obtained polymer was 159.6 g of isotactic polypropylene and its polymerization activity was 166.2 kg-PP/mmol-Zr·hr. As a result of polymer analysis, (η)=2.32 dl/g, MFR=1.85 g/10 minutes, Mw=330,000, Mw/Mn=2.7, Tm=146.7°C, ΔH=88.6 J/g, bulk density was 0.51 g/cm$^3$ and coarse particle amount was 0.0 wt%. Note that adherence was not observed in the autoclave.

EXAMPLE 8

- Homo-Polymerization of Propylene (5) -

Magnetic stirring bar was put into 50 ml side-arm flask, sufficiently substituted with nitrogen. 641 mg of solid catalyst (K') prepared in the above example 3, 1.0 mmol of hexane solution (Al=1.0M) of triisobutylaluminum and 5.0 ml of dehydrated hexane were added to said flask and put into 2000 ml internal capacity autoclave made by SUS which was sufficiently substituted with nitrogen. 500 g of liquid propylene was charged and 40 minutes of polymerization was performed at 70°C. The autoclave was cooled and propylene was purged in order to stop polymerization. The obtained polymer was dried under reduced pressure for 10 hours at 80°C.
The obtained polymer was 122.9 g of isotactic polypropylene and its polymerization activity was 55.1 kg-PP/mmol-Zr·hr. As a result of polymer analysis, (η)=3.58 dl/g, MFR=0.25 g/10 minutes, bulk density was 0.49 g/cm$^3$ and coarse particle amount was 0.0 wt%. Note that adherence was not observed in the autoclave.

EXAMPLE 9

- Homo-Polymerization of Propylene (6) -

Except for adding 283 mg of solid catalyst (K') prepared in the above example 3 and further adding 0.08 NL of hydrogen after 500 g of liquid propylene was charged, the same polymerization was performed as in the above example 8.
The obtained polymer was 170.5 g of isotactic polypropylene and its polymerization activity was 172.9 kg-PP/mmol-Zr·hr. As a result of polymer analysis, (η)=2.24 dl/g, MFR=2.67 g/10 minutes, bulk density was 0.50 g/cm$^3$ and coarse particle amount was 0.0 wt%. Note that adherence was not observed in the autoclave.

EXAMPLE 10

- Random Polymerization of Propylene (1) -

Magnetic stirring bar was put into 50 ml side-arm flask, sufficiently substituted with nitrogen. 160 mg of slurry of solid catalyst (K) prepared in the above example 2, 1.0 mmol of hexane solution (Al=1.0M) of triisobutylaluminum and 5.0 ml of dehydrated hexane were added to said flask and put into 2000 ml internal capacity autoclave made by SUS which was sufficiently substituted with nitrogen. 500 g of liquid propylene, 3.0 NL of ethylene and subsequently 0.3 NL of hydrogen were charged and 40 minutes of polymerization was performed at 60°C. The autoclave was cooled and propylene was purged in order to stop polymerization. The obtained polymer was dried under reduced pressure for 10 hours at 80°C.
The obtained polymer was 243.5 g of ethylene-propylene copolymer and its polymerization activity was 562.8 kg-PP/mmol-Zr·hr. As a result of polymer analysis, (η)=1.44 dl/g, MFR=23.6 g/10 minutes, ethylene content was 2.53 mol%, Tm=131.3°C, ΔH=85.7J/g, bulk density was 0.42 g/cm$^3$ and coarse particle amount was 0.12 wt%. Uniformity was 2, repose angle was 32°, degree of compression was 8%, spatula angle was 37° and Carr index was 88.

EXAMPLE 11

- Random Polymerization of Propylene (2) -

Except for adding 157 mg of slurry of solid catalyst (K) prepared in the above example 2 and further adding 0.6 NL of hydrogen after 500 g of liquid propylene was charged, the same polymerization was performed as in the above example 10.
The obtained polymer was 271.0 g of ethylene-propylene copolymer and its polymerization activity was 638.3 kg-PP/mmol-Zr·hr. As a result of polymer analysis, (η)=0.96 dl/g, MFR=175 g/10 minutes, ethylene content was 2.68 mol%, Tm=131.5°C, ΔH=76.2 J/g, bulk density was 0.44 g/cm$^3$ and coarse particle amount was 0.53 wt%.

EXAMPLE 12

- Random Polymerization of Propylene (3) -

Except for using 89 mg of solid catalyst (K) slurry prepared in the above example 2 and polymerizing for 30 minutes, the same polymerization was performed as in the above example 10.
The obtained polymer was 143.2 g of ethylene-propylene copolymer and its polymerization activity was 795.3 kg-PP/mmol-Zr·hr. As a result of polymer analysis, ($\eta$)=1.97 dl/g, MFR=13.7 g/10 minutes, ethylene content was 3.70 mol%, Tm=123.2°C, $\Delta$H=66.4 J/g, bulk density was 0.38 g/cm$^3$ and coarse particle amount was 0.13 wt%. Uniformity was 2, repose angle was 36°, degree of compression was 7%, spatula angle was 39° and Carr index was 85.

EXAMPLE 13

- Extraction Test (1) of solid catalyst (K) for olefin polymerization -

In dried nitrogen atmosphere, 150 mg of powdery solid catalyst (K) manufactured in the above example 1 was weighed. 7.5 g of dried hexane was added and stirred for one hour in an atmosphere of 22°C. The obtained slurry was filtered with membrane filter of Teflon (registered mark) having 3$\mu$m pore diameter. The obtained filtrate was condensed under reduced pressure and dried under reduced pressure for 3 hours at 3hPa in an atmosphere of 22°C. The obtained nonvolatile component was 0.3 mg.

EXAMPLE 14

- Extraction Test (2) of solid catalyst (K) for olefin polymerization -

In dried nitrogen atmosphere, 150 mg of powdery solid catalyst (K) manufactured in the above example 1 was weighed. Said catalyst was statically placed in a desiccator provided with saturated potassium acetate aqueous solution, and then, made contact with water vapor for 7 days. After taken out from said desiccator, 1 g of deuterated acetonitrile was added in atmosphere and stirred for 30 minutes. Filtration was performed through glass tube filled with glass wool, and then $^1$H-NMR of the obtained filtrate was measured. NMR chart is shown in Fig. 1. Peak derived from oxymethylene was confirmed at 3.2 to 3.3 ppm. Note that basis of chemical shift is the peak (1.93 ppm) of residual proton of acetonitrile.

EXAMPLE 15

- Manufacturing solid catalyst (K) for olefin polymerization -

Toluene slurry of silica supporting methylaluminoxane was obtained by the same method as in example 1, process P1, by using silica gel wherein particles having diameter of 4$\mu$m or less were eliminated and prepared to be 180 g/L. 100 ml of four-neck flask, sufficiently substituted with nitrogen, was equipped with stirring rod and 11.1 ml of said slurry and 30 ml of toluene were charged. 1.0 ml of 10g/L hexane suspension of polyoxyethylene (10) stearylamine ether (by Wako Pure Chemical Industries, Ltd.) was added. After 45 minutes reaction at 35°C, a preliminary mixed mixture including 33.5mg of transition metal compound of diphenyl methylene(3-tert-butyl-5-methyl-cyclopentadienyl) (2,7-di-tert-butyl-fluoreny 1) zirconium dichloride (manufactured by the method described in WO2004/087775), 0.9 ml of toluene solution including triisobutylaluminum (0.5 M) and 4 ml of toluene were added. After one hour reaction, the obtained slurry was filtered with membrane filter, washed twice with 15 ml of hexane, and then filtered, subsequently washed with 15 ml of hexane and filtered. The obtained filtrate was condensed under reduced pressure and its residue was less than 0.1 mg. The obtained powder was dried under reduced pressure for 2 hours and 2.09 g of powdery solid catalyst was obtained. Said catalyst was mixed with dehydrated liquid paraffin to obtain 20.0 wt% slurry. As a result of analysis, zirconium in said powder was 0.17 wt% and aluminum was 16.9 wt%. A loss of ignition was 11.2 wt%. Peaks of silicon and aluminum elements were confirmed by element analysis of residue after ignition

EXAMPLE 16

- Homo-Polymerization of Propylene (7) -

Magnetic stirring bar was put into 50 ml side-arm flask, sufficiently substituted with nitrogen. 599 mg of solid catalyst slurry prepared in the above example 15, 0.75 mmol of hexane solution (Al=1.0M) of triisobutylaluminum and 5.0 ml of dehydrated hexane were added to said flask and put into 3,400 ml internal capacity autoclave made by SUS

which was sufficiently substituted with nitrogen. 750 g of liquid propylene was charged and 0.08NL of hydrogen was added, and then 40 minutes of polymerization was performed at 70°C. The autoclave was cooled and propylene was purged in order to stop polymerization. The obtained polymer was dried under reduced pressure for 10 hours at 80°C. The obtained polymer was 183.3 g of isotactic polypropylene and its polymerization activity was 120.4 kg-PP/mmol-Zr·hr. As a result of polymer analysis, (η)=2.60 dl/g, MFR=1.17 g/10 minutes, bulk density was 0.50 g/$cm^3$ and coarse particle amount was 0.1 wt%. Uniformity was 2, repose angle was 28°, degree of compression was 11%, spatula angle was 26° and Carr index was 93.

EXAMPLE 17

- Homo-Polymerization of Propylene (8) -

Except for adding 539 mg of solid catalyst slurry prepared in the above example 15 and further adding 0.16 NL of hydrogen after 750 g of liquid propylene was charged, the same polymerization was performed as in the above example 15. The obtained polymer was 285.0 g of isotactic polypropylene and its polymerization activity was 208 kg-PP/mmol-Zr·hr. As a result of polymer analysis, (η)=1.86 dl/g, MFR=6.9 g/10 minutes, bulk density was 0.50 g/$cm^3$ and coarse particle amount was 0.2 wt%. Uniformity was 2, repose angle was 28°, degree of compression was 11%, spatula angle was 27° and Carr index was 93.

EXAMPLE 18

- Homo-Polymerization of Propylene (9) -

Magnetic stirring bar was put into 50 ml side-arm flask, sufficiently substituted with nitrogen. 502 mg of solid catalyst slurry prepared in the above example 2, 0.75 mmol of hexane solution (Al=1.0M) of triisobutylaluminum and 5.0 ml of dehydrated hexane were added to said flask and put into 3,400 ml internal capacity autoclave made by SUS which was sufficiently substituted with nitrogen. 750 g of liquid propylene was charged and 0.08NL of hydrogen was added, and then 40 minutes of polymerization was performed at 70°C. The autoclave was cooled and propylene was purged in order to stop polymerization. The obtained polymer was dried under reduced pressure for 10 hours at 80°C. The obtained polymer was 185.9 g of isotactic polypropylene and its polymerization activity was 137.1 kg-PP/mmol-Zr·hr. As a result of polymer analysis, (η)=2.54 dl/g, MFR=1.15 g/10 minutes, bulk density was 0.49 g/$cm^3$ and coarse particle amount was 0.1 wt%.

EXAMPLE 19

- Homo-Polymerization of Propylene (10) -

Except for adding 0.16NL of hydrogen, the same polymerization was performed as in the above example 18. The obtained polymer was 286.2 g of isotactic polypropylene and its polymerization activity was 211 kg-PP/mmol-Zr·hr. As a result of polymer analysis, (η)=1.98 dl/g, MFR=4.9 g/10 minutes, bulk density was 0.50 g/$cm^3$ and coarse particle amount was 0.0 wt%.

EXAMPLE 20

- Extraction Test (3) of solid catalyst (K) for olefin polymerization -

In dried nitrogen atmosphere, 500 mg of powdery solid catalyst (K) manufactured in the above example 15 was weighed. 7.5 g of dried hexane was added and stirred for one hour in an atmosphere of 22°C. The obtained slurry was filtered with membrane filter of Teflon (registered mark) having 3$\mu$m pore diameter. The obtained filtrate was condensed under reduced pressure and dried under reduced pressure for 3 hours at 3hPa in an atmosphere of 22°C. The obtained nonvolatile component was less than 0.1 mg.

EXAMPLE 21

- Extraction Test (4) of solid catalyst (K) for olefin polymerization -

In dried nitrogen atmosphere, 500 mg of powdery solid catalyst (K) manufactured in the above example 15 was weighed. Said catalyst was statically placed in a desiccator provided with saturated potassium acetate aqueous

solution, and then, made contact with water vapor for 7 days. After taken out from said desiccator, 1.5 g of deuterated acetonitrile was added in atmosphere and stirred for 30 minutes. Filtration was performed through glass tube filled with glass wool, and then $^1H$-NMR of the obtained filtrate was measured. Peak derived from oxymethylene group was confirmed at 3.2 to 3.3 ppm. Note that basis of chemical shift was the peak of tetramethylsilane.

EXAMPLE 22

- Manufacturing solid catalyst (K) for olefin polymerization -

Toluene slurry of silica supporting methylaluminoxane was manufactured by the method described in Japanese Unexamined Patent Publication No. 2000-327707 and prepared to be concentration of 200 g/L. 24 ml of said toluene slurry of silica supporting methylaluminoxane and 16 ml of toluene were charged into 100 ml of three-neck flask. And 3.6 ml of 20 g/L hexane solution of polyalkylene oxyglycol (trade name: ADEKA Pluronic L-71 by ASAHI DENKA Co., Ltd.) was added to the flask. After 30 minutes reaction, toluene slurry of 45 mg ethylenebis(indenyl)zirconiumdichloride was added. After one hour reaction, the obtained slurry was filtered with membrane filter and washed twice with 10 ml of hexane (Residue was 0.1 mg or less after condensing all the filtrate under reduced pressure). Further washed with 10 ml of hexane, the filtrate was condensed under reduced pressure and its residue was 0.1 mg or less. The obtained powder was dried under reduced pressure for 2 hours and 4.82 g of powder was obtained. Said powder was mixed with dehydrated liquid paraffin to obtain 20.0 wt% slurry. As a result of analysis, zirconium included in the supporting catalyst was 0.18 wt% and aluminum was 11.8 wt%. A loss of ignition was 7.79 wt%. Peaks of silicon and aluminum elements were confirmed by element analysis of residue after ignition.

EXAMPLE 23

- Slurry Polymerization of Ethylene -

500 ml of heptane was charged into 1,000 ml internal capacity autoclave made by SUS, sufficiently substituted with nitrogen. By charging ethylene gas, said autoclave was saturated with ethylene. 0.25 mmol of hexane solution (Al=0.5 M) of triisobutylaluminum was added. Meanwhile, 0.133 g of supporting catalyst slurry prepared in example 22 was weighed in 50 ml of three-cock flask, and then 4 ml of heptane in the autoclave was poured and stirred. The obtained slurry of the catalyst was charged into autoclave. By pouring 4 ml of heptane into flask from autoclave and then charging into autoclave again, catalyst was added to the autoclave. Subsequently, 5 ml of 1-hexene was charged and ethylene was continuously supplied so as to make inside of the autoclave 0.8 MPa at 80°C and polymerization was performed for 65 minutes. The autoclave was cooled and residue gas was purged in order to stop polymerization. Note that adherence was not observed on inner wall of polymerization vessel. The obtained slurry of polymer was filtered with Kiriyama-rohto (φ 95mm, filter paper No. 5B). There was no clog at the filter paper. The obtained polymer was dried under reduced pressure for 10 hours at 80°C. The obtained polymer was 44.7 g and its polymerization activity was 80.4 kg-PE/mmol-Zr·hr. As a result of polymer analysis, bulk density was 0.38 g/cm$^3$ and its density was 930 kg/m$^3$.

EXAMPLE 24

- Gas-Phase Polymerization of Ethylene -

500 g of sodium chloride was charged into 1,000 ml internal capacity autoclave made by SUS, sufficiently substituted with nitrogen. By sufficiently drying on heating, cooling, and charging ethylene gas, autoclave was saturated with ethylene. 0.25 mmol of hexane solution (Al=0.5 M) of triisobutylaluminum was added. Meanwhile, 0.312 g of supporting catalyst slurry prepared in example 22 and 0.13 mmol of hexane solution (Al=0.5 M) of triisobutylaluminum were added to 50 ml of three-cock flask. The obtained slurry of the catalyst was charged into autoclave. Subsequently, autoclave was substituted with ethylene gas containing 4.0 wt% of 1-butene, and then ethylene/butene mixed gas was supplied so as to make inside of the autoclave 0.8 MPa at 80°C and polymerization was performed for 60 minutes. The autoclave was cooled and residue gas was purged in order to stop polymerization. 2L of water was added to the obtained powder and stirred, and then the polymer slurry was filtered with bleached cloth. After washing the obtained polymer, said polymer was dried under reduced pressure for 10 hours at 80°C. The obtained polymer was 30.9 g and its polymerization activity was 23.5 kg-PE/mmol-Zr·hr. As a result of polymer analysis, coarse particle amount was 1.5 wt%, bulk density was 0.31 g/cm$^3$, its density was 922 kg/m$^3$, and (η)=1.62 dl/g.

EXAMPLE 25

- Extraction Test (5) of solid catalyst (K) for olefin polymerization -

In dried nitrogen atmosphere, 500 mg of powdery solid catalyst (K) manufactured in the above example 22 was weighed. 7.5 g of dried hexane was added and stirred for one hour in an atmosphere of 23°C. The obtained slurry was filtered with membrane filter of Teflon (registered mark) having 3μm pore diameter. The obtained filtrate was condensed under reduced pressure and dried under reduced pressure for 3 hours at 3hPa in an atmosphere of 22°C. The obtained nonvolatile component was less than 0.1 mg.

EXAMPLE 26

- Extraction Test (6) of solid catalyst (K) for olefin polymerization -

In dried nitrogen atmosphere, 500 mg of powdery solid catalyst (K) manufactured in the above example 22 was weighed. Said catalyst was statically placed in a desiccator provided with saturated potassium acetate aqueous solution, and then, made contact with water vapor for 7 days. After taken out from said desiccator, 1.5 g of deuterated acetonitrile was added in atmosphere and stirred for 30 minutes. Filtration was performed through glass tube filled with glass wool, and then $^1$H-NMR of the obtained filtrate was measured. Peak derived from oxymethylene group was confirmed at 3.2 to 3.7 ppm. Note that basis of chemical shift was the peak of tetramethylsilane.

EXAMPLE 27

- Manufacturing solid catalyst (K) for olefin polymerization -

Toluene slurry of silica supporting methylaluminoxane was obtained by the same method as in example 1, process P1, by using silica gel wherein particles having diameter of 4μm or less were eliminated and prepared to be 180 g/L. 200 ml of four-neck flask, sufficiently substituted with nitrogen was equipped with stirring rod and 11.1 ml of said slurry and 30 ml of toluene were charged. Subsequently, 2 ml of 20 g/L hexane solution of polyalkylene oxyglycol (trade name: ADEKA Pluronic L-71 by ASAHI DENKA Co., Ltd.) were added and 45 minutes reaction was performed at 35°C. Further, 5 ml mixture of toluene suspension including 30.2 mg of transition metal compound of rac-dimethylsilylene bis(2-methyl-4-phenyl indene) zirconium dichloride was added. After one hour reaction, the obtained slurry was filtered with membrane filter, washed twice with 15 ml of hexane, and then filtered (All the filtrate was condensed under reduced pressure and residue was 0.1mg or less.), subsequently washed with 15 ml of hexane and filtered. The obtained filtrate was condensed under reduced pressure and its residue was less than 0.1 mg. The obtained powder was dried under reduced pressure for 2 hours and 2.08 g of powdery solid catalyst was obtained. As a result of analysis, zirconium in said powder was 0.18 wt% and aluminum was 17.0 wt%. The obtained catalyst was mixed with dehydrated liquid paraffin to obtain 10.0 wt% slurry.

EXAMPLE 28

- Homo-Polymerization of Propylene (11) -

Magnetic stirring bar was put into 50 ml side-arm flask, sufficiently substituted with nitrogen. 598 mg of solid catalyst (K) slurry prepared in the above example 27, 0.75 mmol of hexane solution (Al=1.0M) of triisobutylaluminum and 5.0 ml of dehydrated hexane were added to said flask and put into 3,400 ml internal capacity autoclave made by SUS, which was sufficiently substituted with nitrogen. 750 g of liquid propylene was charged, and then 40 minutes of polymerization was performed at 70°C. The autoclave was cooled and propylene was purged in order to stop polymerization. The obtained polymer was dried under reduced pressure for 10 hours at 80°C. The obtained polymer was 138.8 g of isotactic polypropylene and its polymerization activity was 179 kg-PP/mmol-Zr·hr. As a result of polymer analysis, MFR<0.01 g/10 minutes, (η)=6.71 dl/g, bulk density was 0.47 g/cm$^3$ and coarse particle amount was 1.2 wt%. Note that adherence of the polymer was not observed in the autoclave.

EXAMPLE 29

- Extraction Test (7) of solid catalyst (K) for olefin polymerization -

In dried nitrogen atmosphere, 200 mg of powdery solid catalyst (K) manufactured in the above example 27

was weighed. Said catalyst was statically placed in a desiccator provided with saturated potassium acetate aqueous solution, and then, made contact with water vapor for 7 days. After taken out from said desiccator, 1.5 g of deuterated acetonitrile was added in the atmosphere and stirred for 30 minutes. Filtration was performed through glass tube filled with glass wool, and then $^1$H-NMR of the obtained filtrate was measured. Peak derived from oxymethylene group was confirmed at 3.2 to 3.7 ppm. Note that basis of chemical shift was the peak of tetramethylsilane.

[COMPARATIVE EXAMPLE 1]

-Manufacturing solid catalyst for olefin polymerization -

[The First Process]

5.00 g of silica gel (trade name: H-122 by Asahi SI Tech Co., Ltd.) dried at 200°C under nitrogen atmosphere and 44 ml of dehydrated toluene were added to 100 ml of four-neck flask, sufficiently substituted with nitrogen and equipped with stirring rod, and then, heated to 50°C with oil bath. 2.5 ml of toluene solution (1M) of triisobutyl aluminum was added, and then, 19.0 ml of toluene solution of methylaluminoxane (9.1 wt% aluminum concentration by Tosoh Finechem Co.) was further added. 30 minutes reaction at 50°C, and then 4 hours reaction at 95°C were performed. After leaving at rest at 60°C, 31 ml of supernatant solution was removed by decantation, and then, toluene slurry of silica supporting methylaluminoxane was obtained.

[The Second Process]

Toluene slurry of silica supporting methylaluminoxane obtained in the above process was kept at 35°C and 20 ml of hexane was added. After 45 minutes reaction, a preliminary mixed mixture including 150 mg of transition metal compound of diphenylmethylene (3-tert-butyl-5-methyl-cyclopentadienyl)(2,7-di-tert-butyl-fluorenyl)zirconiu m dichloride (manufactured by the method described in WO2004/087775), 1.86 ml of toluene solution (1M) including triisobutylaluminum and 4ml of hexane were added. After one hour reaction, the obatained slurry was filtered with membrane filter. The obtained powder was dried under reduced pressure for 2 hours and 9.16 g of powder was obtained. As a result of analysis, zirconium in said powder was 0.17 wt%. The powder was mixed with dehydrated liquid paraffin to obtain 20.0 wt% slurry.

[COMPARATIVE EXAMPLE 2]

- Homo-Polymerization of Propylene (1) -

Magnetic stirring bar was put into 50 ml side-arm flask, sufficiently substituted with nitrogen. 714 mg slurry of supporting catalyst prepared in the above comparative example 1, 1.0 mmol of hexane solution (Al=1.0M) of triisobutylaluminum and 5.0 ml of dehydrated hexane were added to said flask and put into 2000 ml internal capacity autoclave made by SUS, sufficiently substituted with nitrogen. 500 g of liquid propylene was charged and 40 minutes of polymerization was performed at 70°C. The autoclave was cooled and propylene was purged in order to stop polymerization. The obtained polymer was dried under reduced pressure for 10 hours at 80°C.
The obtained polymer was 128.6 g of isotactic polypropylene and its polymerization activity was 71.1 kg-PP/mmol-Zr·hr. As a result of polymer analysis, (η)=3.29 dl/g, MFR=0.27 g/10 minutes and coarse particle amount was 25.0 wt%. Bulk density was unable to measure since polymer powder was blocking in rohto. Bulk density of powder passed through 1mm openings of sieve was 0.39 g/cm$^3$. Note that adherence of the polymer was observed in autoclave.

[COMPARATIVE EXAMPLE 3]

- Homo-Polymerization of Propylene (2) -

Except for adding 308 mg of slurry of supporting catalyst prepared in the above comparative example 1 and further adding 0.08NL of hydrogen after 500 g of liquid propylene was charged, the same polymerization was performed as in the above comparative example 2.
The obtained polymer was 143.8 g of isotactic polypropylene and its polymerization activity was 184 kg-PP/mmol-Zr·hr. As a result of polymer analysis, (η)=2.34 dl/g, MFR=1.85 g/10 minutes, and coarse particle amount was 50.3 wt%. Bulk density was unable to measure since polymer powder was blocking in rohto. Bulk density of powder passed through 1mm openings of sieve was 0.36 g/cm$^3$. Note that adherence of the polymer was observed in autoclave.

[COMPARATIVE EXAMPLE 4]

- Manufacturing solid catalyst for olefin polymerization -

Except for not adding polyalkylene oxyglycol (trade name: ADEKA Pluronic L-71 by ASAHI DENKA Co., Ltd.), the same manufacturing method was performed as in example 22. As a result of analysis, zirconium included in the supporting catalyst was 0.19 wt%.

[COMPARATIVE EXAMPLE 5]

- Slurry Polymerization of Ethylene -

500 ml of heptane was charged into 1,000 ml internal capacity autoclave made by SUS, sufficiently substituted with nitrogen. By charging ethylene gas, said autoclave was saturated with ethylene. 0.25 mmol of hexane solution (Al=0.5 M) of triisobutylaluminum was added. Meanwhile, except for 0.134 g of supporting catalyst slurry prepared in comparative example 4 was put into 50 ml of three-cock flask, and then polymerization was performed for 90 minutes, the same manufacturing method was performed as in example 23. Note that adherence of the polymer was observed on inner wall of polymerization vessel. The obtained slurry of polymer was filtered with Kiriyama-rohto (φ 95mm, filter paper No. 5B). Since it was a fine powder, clog was caused at filter and that filtration speed was slow. The obtained polymer was dried under reduced pressure for 10 hours at 80°C. The obtained polymer was 52.7 g and its polymerization activity was 62.4 kg-PE/mmol-Zr·hr. As a result of polymer analysis, bulk density was 0.38 g/cm$^3$ and its density was 930 kg/m$^3$.

[COMPARATIVE EXAMPLE 6]

- Propylene bulk polymerization -

Except for using 303 mg slurry of supporting catalyst prepared in the above comparative example 1 and charging 0.15 ml of 10 g/L hexane solution of L-71 before charging said supporting catalyst, the same polymerization was performed as in example 4. Adherence of the polymer was not observed in polymerization vessel.
The obtained polymer was 92.6 g of isotactic polypropylene and its polymerization activity was 120.7 kg-PP/mmol-Zr·hr. As a result of polymer analysis, bulk density was 0.51 g/cm$^3$ and (η)=2.46 dl/g. Fouling and also bulk density of polymer were improved, while polymerization activity was deteriorated.

[COMPARATIVE EXAMPLE 7]

- Gas-Phase Polymerization of Ethylene -

500 g of sodium chloride was charged into 1,000 ml internal capacity autoclave made by SUS, sufficiently substituted with nitrogen. By sufficiently drying on heating, cooling, and charging ethylene gas, autoclave was saturated with ethylene. 0.25 mmol of hexane solution (Al=0.5 M) of triisobutylaluminum was added. Meanwhile, 0.303 g of supporting catalyst slurry prepared in comparative example 4 and 0.13 mmol of hexane solution (Al=0.5 M) of triisobutylaluminum were added. The obtained slurry of the catalyst was charged into autoclave. Subsequently, autoclave was substituted with ethylene gas containing 4.0 wt% of 1-butene, and then ethylene/butene mixed gas was supplied so as to make inside of the autoclave 0.8 MPa at 80°C and polymerization was performed for 60 minutes. The autoclave was cooled and residue gas was purged in order to stop polymerization. 2L of water was added to the obtained powder and stirred, and then the polymer was filtered with bleached cloth. After washing the obtained polymer, said polymer was dried under reduced pressure for 10 hours at 80°C. The obtained polymer was 27.2 g and its polymerization activity was 21.3 kg-PE/mmol-Zr·hr. As a result of polymer analysis, coarse particle amount was 2.2 wt%, bulk density was 0.29 g/cm$^3$, its density was 922 kg/m$^3$, and (η)=3.24 dl/g.

[COMPARATIVE EXAMPLE 8]

- Manufacturing solid catalyst for olefin polymerization -

Except for not adding polyalkylene oxyglycol, the same manufacturing method was performed as in example 27 and 10 wt% slurry of solid catalyst was obtained. Zirconium in said powder was 0.19 wt%.

[COMPARATIVE EXAMPLE 9]

Except for using 601 mg of solid catalyst slurry prepared in the above comparative example 8, the same polymerization was performed as in example 28. The obtained polymer was 172.5 g of isotactic polypropylene and its polymerization activity was 210 kg-PP/mmol-Zr·hr. As a result of polymer analysis, MFR<0.01 g/10 minutes, (η)=6.93 dl/g and coarse particle amount was 60.4 wt%. Bulk density was unable to measure since polymer powder was blocking in rohto. Bulk density of powder passed through 1mm openings of sieve was 0.33 g/$m^3$. Note that adherence of the polymer was observed in autoclave.

[COMPARATIVE EXAMPLE 10]

-Manufacturing preliminary polymerization catalyst for olefin polymerization -

10.01 g of liquid paraffin slurry manufactured in comparative example 1 and 40 ml of hexane were added to 200 ml flask and heated to 34°C. 2.0 ml of 1 mol/L hexane solution of triisobutylaluminum was further added. Ethylene was blown into gas phase part at a rate of 1.5 NL/h and polymerized for 4 hours at 35°C. Residue ethylene was purged with nitrogen and then, the obtained slurry was filtered with membrane filter. The obtained powder was dried under reduced pressure for 3 hours and 6.70 g of solid catalyst (K') was obtained. 2.35 g of polymer with respect to 1 g of solid catalyst was polymerized.

[COMPARATIVE EXAMPLE 11]

-Contact treatment of a preliminary polymerization catalyst for olefin polymerization and a compound comprising oxyalkylene skeleton-

Under dry nitrogen atmosphere, 2.0 g of preliminary polymerization catalyst manufactured in comparative example 10 was weighed. 13.2 g of dried hexane and 2.0 ml of 20 g/L hexane solution of polyalkylene oxyglycol (trade name: ADEKA Pluronic L-71 by ASAHI DENKA Co., Ltd.) were added. 4 hours of stirring at 35°C was performed. The obtained slurry was filtered with membrane filter of Teflon (registered mark) having 3μm pore diameter and further, washed 5 times with 10 ml of hexane. The obtained solid substance was dried under reduced pressure. A loss of ignition of the obtained solid catalyst was 73.5 wt%. Further, the obtained filtrate was condensed under reduced pressure and 38.2 mg of oily material was obtained. By $^1$H-NMR measurement, said oily material was determined to be polyalkylene oxyglycol (trade name: ADEKA Pluronic L-71 by ASAHI DENKA Co., Ltd.). Calculated from these results, supporting amount of polyalkylene oxyglycol with respect to solid catalyst was 0.20 wt%.

[COMPARATIVE EXAMPLE 12]

- Extraction Test (1) -

In dried nitrogen atmosphere, 500 mg of the solid substance after contact treatment prepared in the above comparative example 11 was weighed. 7.5 g of dried hexane was added and stirred for one hour in an atmosphere of 23°C. The obtained slurry was filtered with membrane filter of Teflon (registered mark) having 3μm pore diameter. The obtained filtrate was condensed under reduced pressure and dried under reduced pressure for 3 hours at 3hPa in an atmosphere of 22°C. The obtained nonvolatile component was less than 0.1 mg.

[COMPARATIVE EXAMPLE 13]

- Extraction Test (2) -

In dried nitrogen atmosphere, 160 mg of the solid substance after contact treatment prepared in the above comparative example 11 was weighed. Said catalyst was statically placed in a desiccator provided with saturated potassium acetate aqueous solution, and then, made contact with water vapor for 2 days. After taken out from said desiccator, 1 g of deuterated acetonitrile was added in the atmosphere and stirred for 30 minutes. Filtration was performed through glass tube filled with glass wool, and then $^1$H-NMR of the obtained filtrate was measured. Peak derived from oxymethylene group was confirmed at 3.2 to 3.7 ppm. Note that basis of chemical shift was the peak of tetramethylsilane.

[COMPARATIVE EXAMPLE 14]

- Homo-Polymerization of Propylene -

Except for using 408 mg of solid substance after contact treatment prepared in the above comparative example 11 as catalyst, the same polymerization was performed as in example 18. The obtained polymer was 144.5 g of isotactic polypropylene and its polymerization activity was 99.7 kg-PP/mmol-Zr·hr. As a result of polymer analysis, MFR=0.69 g/10 minutes, (η)=2.84 dl/g, bulk density was 0.32 g/$cm^3$ and coarse particle amount was 1.9 wt%. Note that adherence was observed in the autoclave.

[COMPARATIVE EXAMPLE 15]

- Homo-Polymerization of Propylene -

Except for using 400 mg of solid substance after contact treatment prepared in the above comparative example 11 as catalyst, the same polymerization was performed as in example 18. The obtained polymer was 144.5 g of isotactic polypropylene and its polymerization activity was 69.1 kg-PP/mmol-Zr·hr. As a result of polymer analysis, MFR=2.35 g/10 minutes, (η)=2.30 dl/g, bulk density was 0.51 g/$cm^3$ and coarse particle amount was 0.0 wt%. Note that slight adherence was observed in the autoclave. Fouling was not completely improved, while polymerization activity was severely deteriorated.

INDUSTRIAL APPLICABILITY

According to the invention, olefin polymer having an excellent particulate morphology can be produced with good efficiency without the concern of causing fouling. Particularly, the invention shows profound effect on manufacturing polymer having a low melting point which tended to cause fouling and was difficult to manufacture with good efficiency.

## Claims

1. A solid catalyst (K) for olefin polymerization **characterized by** meeting the following requirements [1] and [2] simultaneously:

   [1] a loss of ignition is 30 wt% or less as measured on a differential thermogravimeter; and
   [2] after treating the catalyst with water vapor of room temperature and then contacting it with acetonitrile, component eluted into the acetonitrile comprises compound having a molecular skeleton represented by the following general formula [I] wherein R is a hydrogen atom or an alkyl group having 1 to 12 carbon atoms.

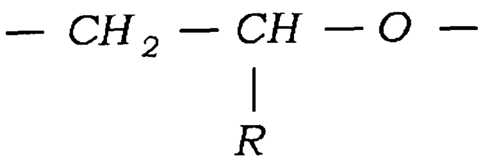 --------- [I]

2. The solid catalyst (K) for olefin polymerization as set forth in claim 1, **characterized by** meeting the following requirement [3]:

   [3] after contacting hexane and filtering out solid part, filtrate does not substantially comprise nonvolatile component.

3. A solid catalyst (K') for olefin polymerization, **characterized in that** the solid catalyst (K) for olefin polymerization as set forth in claim 1 or 2 is pre-polymerized with one or more olefin selected from ethylene and α-olefin having 3 to 8 carbon atoms.

4. A polymerization method of one or more monomer (M) selected from ethylene and α-olefin having 3 to 12 carbon atoms, using the solid catalyst as set forth in any one of claims 1 to 3, and optionally, in the presence of (B) compound

comprising element of group 13 in periodic table.

5. The polymerization method as set forth in claim 4, wherein monomer (M) is propylene and one or more monomer selected from ethylene and α-olefin having 4 to 10 carbon atoms.

6. The polymerization method as set forth in claim 4, wherein monomer (M) is ethylene and one or more monomer selected from α-olefin having 3 to 10 carbon atoms.

7. Olefin polymer particle produced by the method as set forth in claim 5.

8. Olefin polymer particle produced by the method as set forth in claim 6.

9. The Olefin polymer particle as set forth in claim 7, wherein the particle comprises 50 to 100 mole% of repeating unit (U1) derived from propylene and 0 to 50 mole% of repeating unit (U2) derived from one or more olefin selected from ethylene and α-olefin having 4 to 10 carbon atoms.

10. The Olefin polymer particle as set forth in claim 8, wherein the particle comprises 50 to 100 mole% of repeating unit (U3) derived from ethylene and 0 to 50 mole% of repeating unit (U4) derived from one or more olefin selected from α-olefin having 3 to 10 carbon atoms.

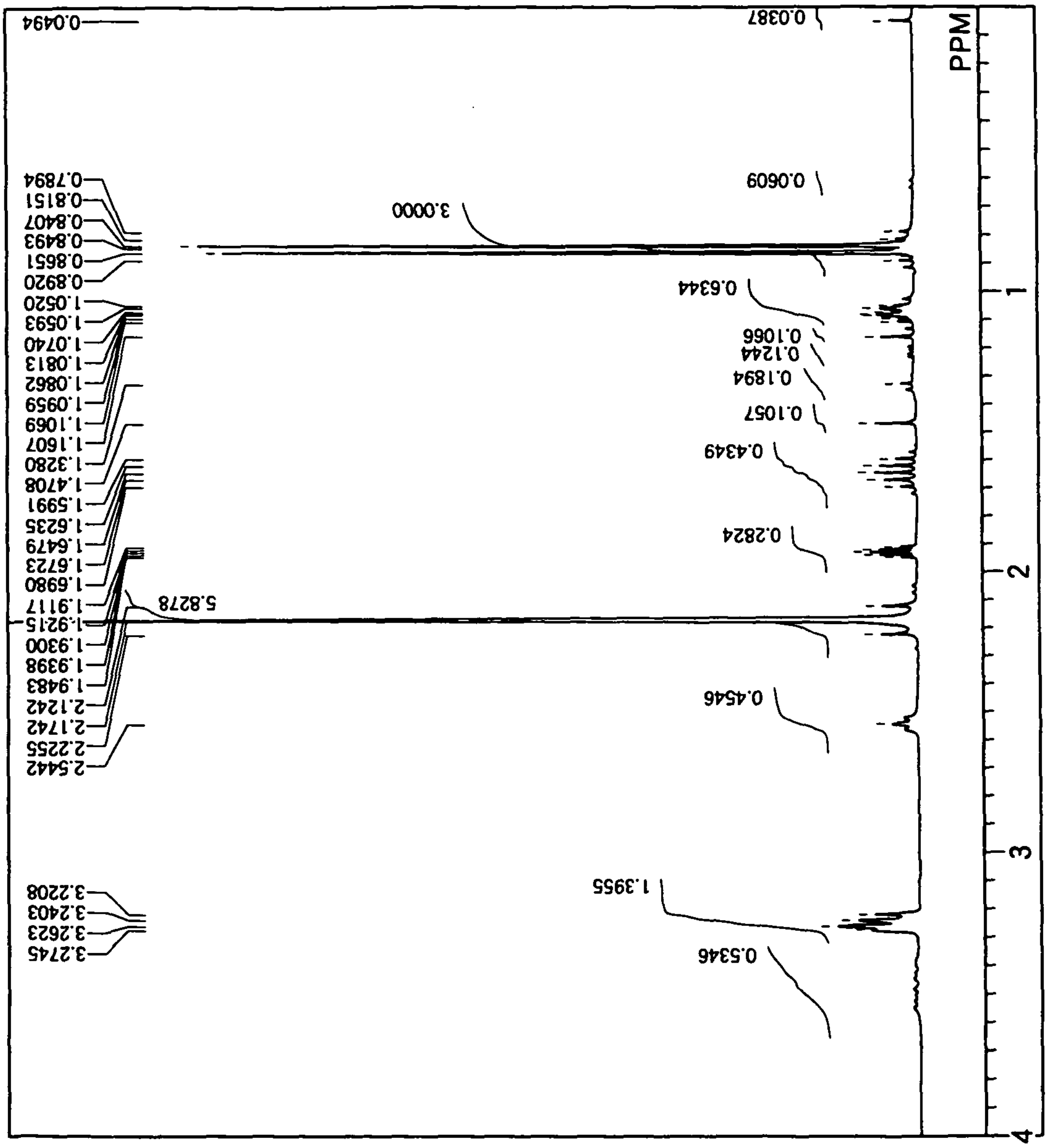
0.0494
0.7894
0.8151
0.8407
0.8493
0.8651
0.8920
1.0520
1.0593
1.0740
1.0813
1.0862
1.0959
1.1069
1.1607
1.3280
1.4708
1.5991
1.6235
1.6479
1.6723
1.6980
1.9117
1.9215
1.9300
1.9398
1.9483
2.1242
2.1742
2.2255
2.5442
3.2208
3.2403
3.2623
3.2745
0.0387
0.0609
3.0000
0.6344
0.1066
0.1244
0.1894
0.1057
0.4349
0.2824
5.8278
0.4546
1.3955
0.5346
PPM
1
2
3
4

FIG. 1

## INTERNATIONAL SEARCH REPORT

International application No. PCT/JP2007/074416

A. CLASSIFICATION OF SUBJECT MATTER
*C08F4/6592*(2006.01)i, *C08F10/00*(2006.01)i

According to International Patent Classification (IPC) or to both national classification and IPC

B. FIELDS SEARCHED

Minimum documentation searched (classification system followed by classification symbols)
C08F4/60-4/70

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 8-208717 A (Mitsui Petrochemical Industries, Ltd.), 13 August, 1996 (13.08.96), Claims 3 to 4; Par. Nos. [0037] to [0040], [0047], [0051], [0060]; examples 1 to 2 (Family: none) | 1-10 |
| X | JP 9-157320 A (Mitsui Petrochemical Industries, Ltd.), 17 June, 1997 (17.06.97), Claims 1 to 4; Par. Nos. [0007], [0023] to [0026], [0030] to [0032], [0039], [0042], [0051]; examples 1 to 2 (Family: none) | 1-10 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 18 March, 2008 (18.03.08) | 01 April, 2008 (01.04.08) |
| Name and mailing address of the ISA/ Japanese Patent Office | Authorized officer |
| Facsimile No. | Telephone No. |

Form PCT/ISA/210 (second sheet) (April 2007)

**INTERNATIONAL SEARCH REPORT**

International application No.
PCT/JP2007/074416

C (Continuation). DOCUMENTS CONSIDERED TO BE RELEVANT

| Category* | Citation of document, with indication, where appropriate, of the relevant passages | Relevant to claim No. |
|---|---|---|
| A | JP 2006-273977 A (Asahi Kasei Chemicals Corp.), 12 October, 2006 (12.10.06), Par. No. [0005] (Family: none) | 1-10 |
| A | JP 2004-352707 A (Chisso Corp.), 16 December, 2004 (16.12.04), Claim 28; Par. Nos. [0184] to [0195] & US 2004/127731 A1 | 1-10 |
| A | JP 2001-11112 A (Mitsui Chemicals, Inc.), 16 January, 2001 (16.01.01), Par. Nos. [0004], [0128] (Family: none) | 1-10 |
| A | JP 10-330413 A (Mitsui Chemicals, Inc.), 15 December, 1998 (15.12.98), Full text (Family: none) | 1-10 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2000297114 A
- JP 2000327707 A
- WO 00008080 A
- JP 2004051715 A
- JP 2002284808 A
- JP H0278687 B
- US 4960878 A
- US 5041584 A
- JP H1501950 B
- JP H1502036 B
- JP H3179005 B
- JP H3179006 B
- JP H3207703 B
- JP H3207704 B
- WO 199641808 A
- US 5321106 A
- WO 2004087775 A


### Non-patent literature cited in the description


- *Angew. Chem. Int. Ed. Engl.,* 1985, vol. 24, 507
- *Chem. Eng.,* 1965, vol. 72, 163